(19) Europäisches Patentamt
European Patent Office
Office européen des brevets

(11) EP 4 564 920 A1

(12) EUROPEAN PATENT APPLICATION
published in accordance with Art. 153(4) EPC

(43) Date of publication:
04.06.2025 Bulletin 2025/23

(21) Application number: 23846825.0

(22) Date of filing: 27.06.2023

(51) International Patent Classification (IPC):
H04W 36/08 (2009.01)    H04W 36/00 (2009.01)
H04W 36/32 (2009.01)    H04W 84/06 (2009.01)
H04W 48/16 (2009.01)

(52) Cooperative Patent Classification (CPC):
H04W 36/00; H04W 36/08; H04W 36/32;
H04W 48/16; H04W 84/06

(86) International application number:
PCT/KR2023/008930

(87) International publication number:
WO 2024/025166 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.07.2022 KR 20220094138

(71) Applicant: Innovative Technology Lab Co., Ltd.
Seocho-gu, Seoul 06744 (KR)

(72) Inventors:
• LEE, Won Seok
  Seoul 06744 (KR)
• PARK, Dong Hyun
  Seoul 06744 (KR)

(74) Representative: Diehl & Partner
Patent- und Rechtsanwaltskanzlei mbB
Erika-Mann-Straße 9
80636 München (DE)

(54) **METHOD AND APPARATUS FOR NEIGHBORING CELL MEASUREMENT FOR CELL RESELECTION IN WIRELESS COMMUNICATION SYSTEM**

(57) Provided is a method of performing, by a user equipment (UE), cell reselection based on non-terrestrial networks (NTN) in a wireless communication system. Here, the method of performing cell reselection may include acquiring cell reselection condition information from a base station; moving from a first cell to a second cell based on mobility of the UE and acquiring measurement related information for cell reselection from the second cell; and performing an NTN cell search when a specific condition for cell reselection is satisfied based on the cell reselection condition information.

FIG. 12

**Description**

TECHNICAL FIELD

The present invention relates to a method and apparatus for neighboring cell measurement for cell reselection in a wireless communication system.

The present invention relates to a method of performing cell reselection based on non-terrestrial networks (NTN).

RELATED ART

The International Mobile Telecommunication (IMT) framework and standard have been developed by the International Telecommunication Union (ITU). Also, a continuous discussion about 5-th generation (5G) communication is ongoing through a program called "IMT for 2020 and beyond".

To satisfy the requirements requested by "IMT for 2020 and beyond", various proposals have been made to support various numerologies about a time-frequency resource unit standard by considering various scenarios, service requirements, and potential system compatibility in a 3-rd Generation Partnership Project (3GPP) new radio (NR) system.

Also, in a new communication system, discussion on a method of supporting seamless communication services to a user equipment (UE) (e.g., vehicle/train/ship-type terminal/personal smartphone) using not only terrestrial networks (TN) but also non-terrestrial networks (NTN) is ongoing, and a method of measuring a neighboring cell reselection in consideration of UE mobility between NTN and TN and performing cell is described.

DETAILED DESCRIPTION

TECHNICAL SUBJECT

The present invention may provide a method and apparatus for performing cell reselection in a wireless communication system.

The present invention relates to a method of performing cell reselection in a non-terrestrial networks (NTN) environment.

The present invention relates to a method of determining a specific condition to perform NTN cell reselection in an NTN environment.

The present invention relates to a method of determining a specific condition to perform terrestrial networks (TN) cell reselection in an NTN environment.

TECHNICAL SOLUTION

According to an embodiment, there may be a provided a method of performing, by a user equipment (UE), cell reselection based on non-terrestrial networks (NTN) in a wireless communication system. Here, the method of performing cell reselection may include acquiring cell reselection condition information from a base station; moving from a first cell to a second cell based on mobility of the UE and acquiring measurement related information for cell reselection from the second cell; and performing an NTN cell search when a specific condition for cell reselection is satisfied based on the cell reselection condition information.

Also, according to an embodiment, the cell reselection condition information may be configured based on at least one of a tracking area code (TAC) list, a RAN-area code (RAC) list, and a cell ID.

Also, according to an embodiment, the cell reselection condition information may be transmitted to the UE through a radio resource control (RRC) message.

Also, according to an embodiment,

a method of performing, by a user equipment (UE), cell reselection based on non-terrestrial networks (NTN) in a wireless communication system, the method including acquiring reference location information and distance threshold information on each of at least one cell from a base station; deriving distance condition information based on the reference location information and the distance threshold information on each of the at least one cell; and performing a TN cell search based on a current location of the UE and the distance condition information.

Also, according to an embodiment, the reference location information and the distance threshold information on each of the at least one cell may be included in frequency information configured for each of the at least one cell.

Also, according to an embodiment, the at least one cell may include a TN cell or an NTN cell.

The features briefly summarized above with respect to the present disclosure are simply exemplary aspects of the detailed description of the present disclosure described below and are not construed as limiting the scope of the present disclosure.

EFFECT

According to the present disclosure, it is possible to provide a method and apparatus for performing cell reselection in a wireless communication system.

According to the present disclosure, it is possible to provide a method of performing cell reselection in a non-terrestrial networks (NTN) environment.

According to the present disclosure, it is possible to provide a method of determining a specific condition to perform NTN cell reselection in an NTN environment.

According to the present disclosure, it is possible to provide a method of determining a specific condition to perform terrestrial networks (TN) cell reselection in an NTN environment.

The present invention is not limited to the aforementioned effects and still other effects not described herein may be clearly understood by one of ordinary skill in the art to which the present disclosure pertains from the following description.

BRIEF DESCRIPTION OF DRAWINGS

FIG. 1 illustrates an example of describing a new radio (NR) frame structure to which the present disclosure may apply.

FIG. 2 illustrates an NR resource structure to which the present disclosure may apply.

FIG. 3 illustrates non-terrestrial networks (NTN) including a transparent satellite to which the present disclosure may apply.

FIG. 4 illustrates NTN including a regenerative satellite without inter-satellite links (ISL) to which the present disclosure may apply.

FIG. 5 illustrates NTN including a regenerative satellite with ISL to which the present disclosure may apply.

FIG. 6 illustrates a user plane (UP) protocol stack structure in NTN including a transparent satellite to which the present disclosure may apply.

FIG. 7 illustrates a control plane (CP) protocol stack structure in NTN including a transparent satellite to which the present disclosure may apply.

FIG. 8 illustrates a timing advance calculation method to which the present disclosure may apply.

FIG. 9 illustrates an earth fixed cell scenario to which the present disclosure may apply.

FIG. 10 illustrates an earth moving cell scenario to which the present disclosure may apply.

FIG. 11 illustrates a method of mapping physical cell id (PCI) to satellite beams to which the present disclosure may apply.

FIG. 12 illustrates a method of covering, by a satellite, a plurality of tracking areas (TAs) to which the present disclosure may apply.

FIG. 13 illustrates a method of measuring a TN cell in an NTN environment applicable to the present disclosure.

FIG. 14 illustrates an overlapping environment of a TN cell and an NTN cell applicable to the present disclosure.

FIG. 15 illustrates an environment in which a TN cell and an NTN cell overlap applicable to the present disclosure.

FIG. 16 illustrates a method of performing tracking area code (TAC) list-based measurement applicable to the present disclosure.

FIG. 17 illustrates a TAC list-based NTN cell measurement signaling procedure applicable to the present disclosure.

FIG. 18 illustrates a method of performing a cell list-based measurement procedure applicable to the present disclosure.

FIG. 19 illustrates a cell list-based NTN cell measurement signaling procedure applicable to the present disclosure.

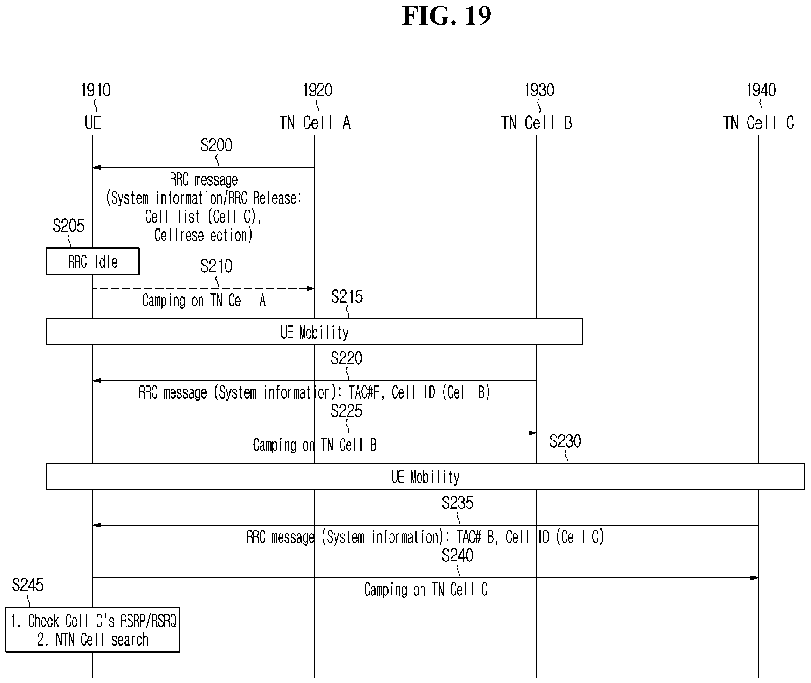

FIG. 19 illustrates a new timer to which the present disclosure may apply.

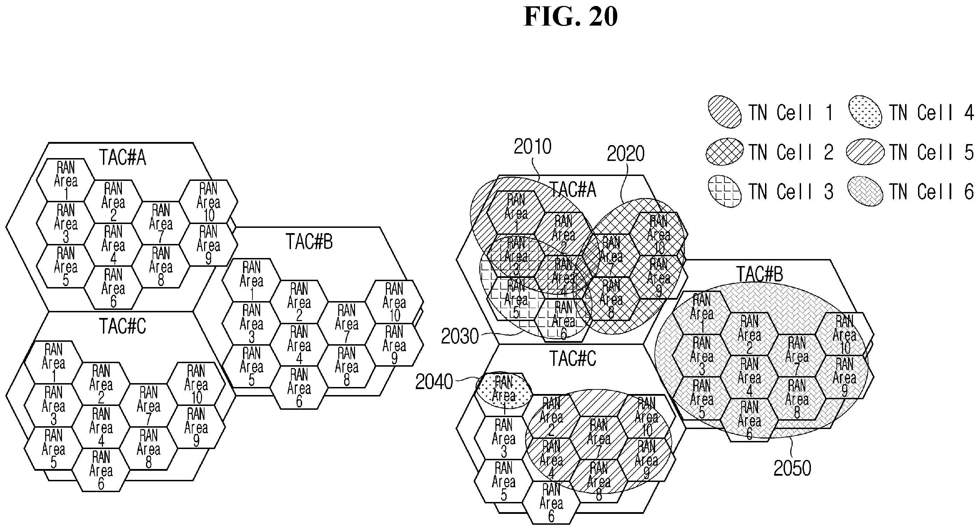

FIG. 20 illustrates a method of performing measurement based on a RAN area code (RAC) applicable to the present disclosure.

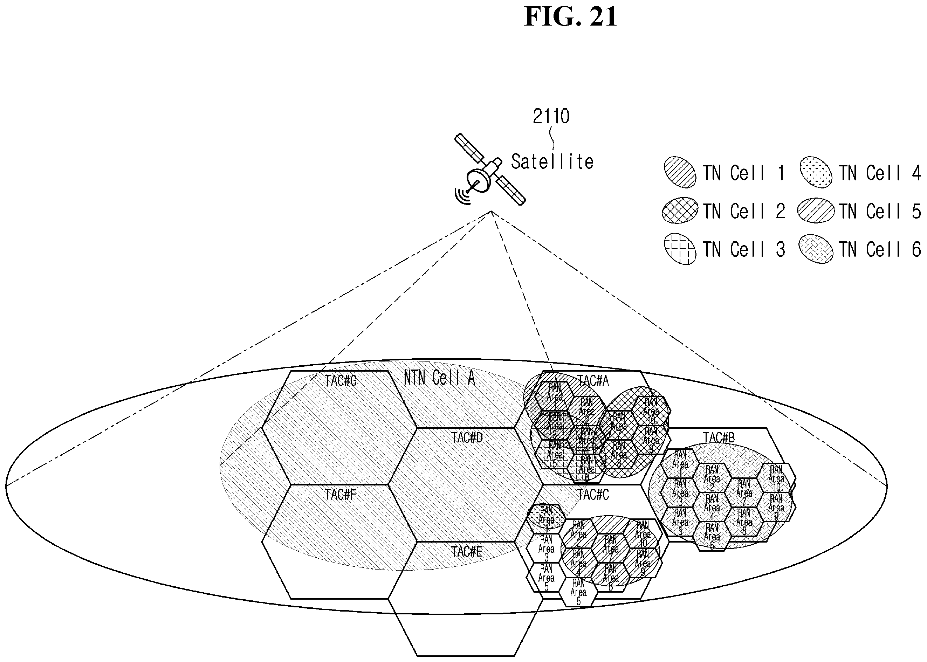

FIG. 21 illustrates a method of performing measurement based on a RAC applicable to the present disclosure.

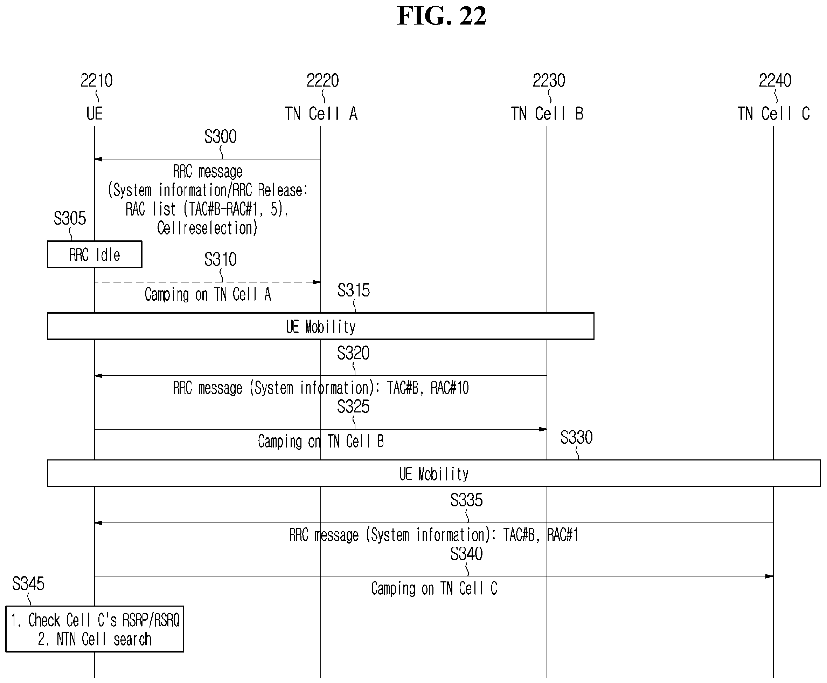

FIG. 22 illustrates a RAC list-based NTN cell measurement signaling procedure applicable to the present disclosure.

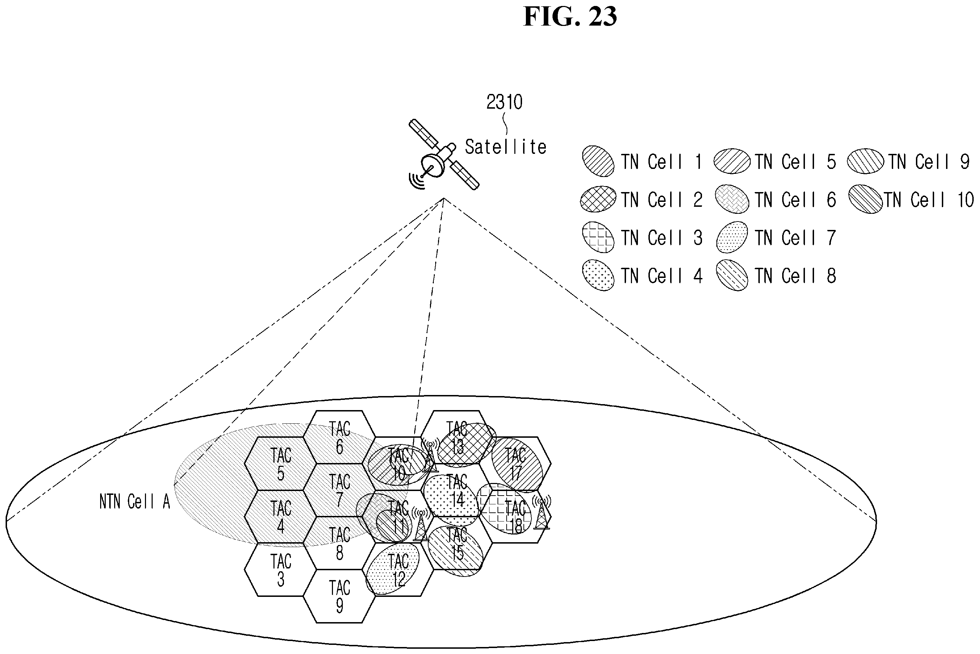

FIG. 23 illustrates a method of performing measurement based on at least one of TAC, cell, and RAC lists applicable to the present disclosure.

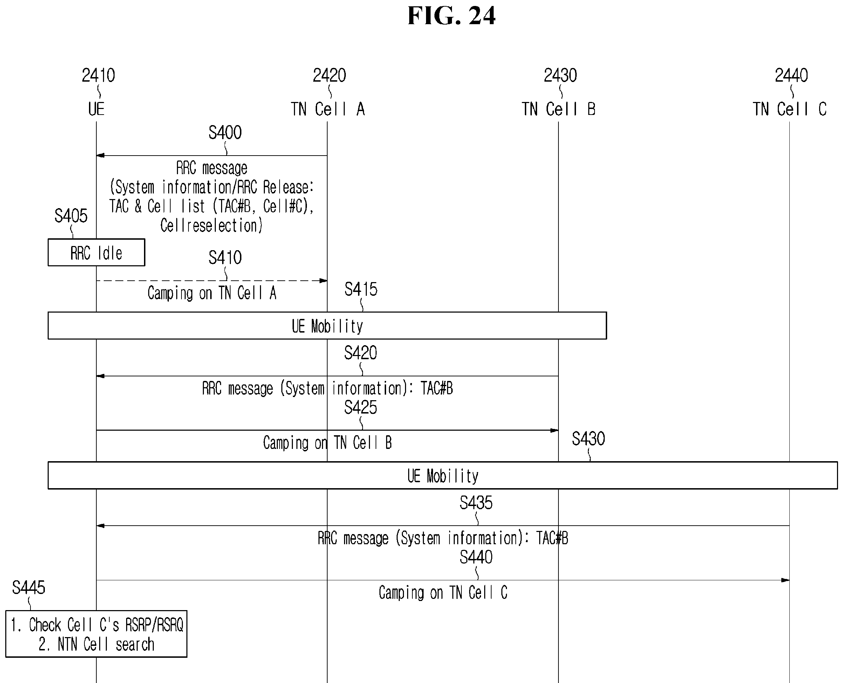

FIG. 24 illustrates an NTN cell measurement signaling procedure based on at least one of TAC, cell, and RAC lists applicable to the present disclosure.

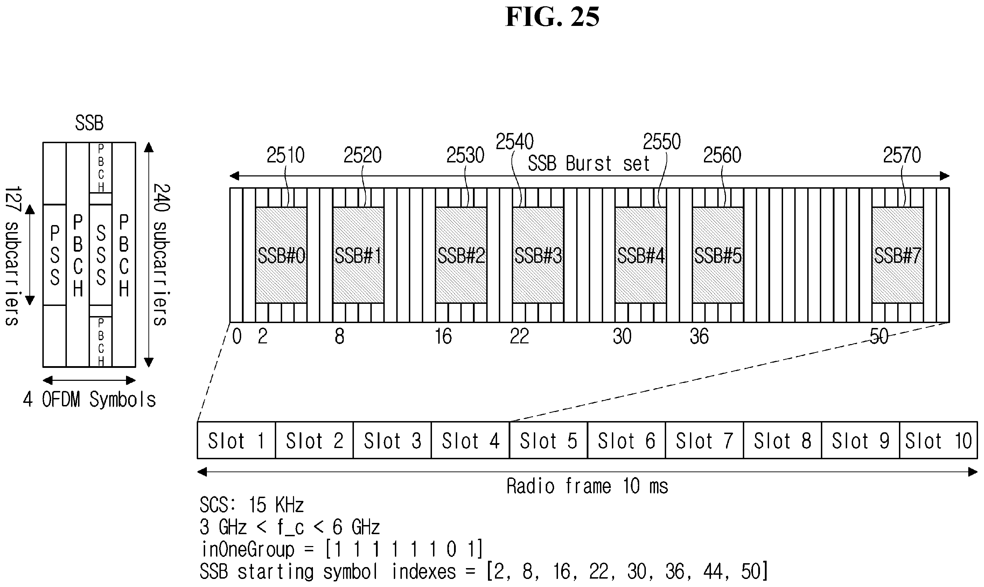

FIG. 25 illustrates a synchronization signal block (SSB) configuration applicable to the present disclosure.

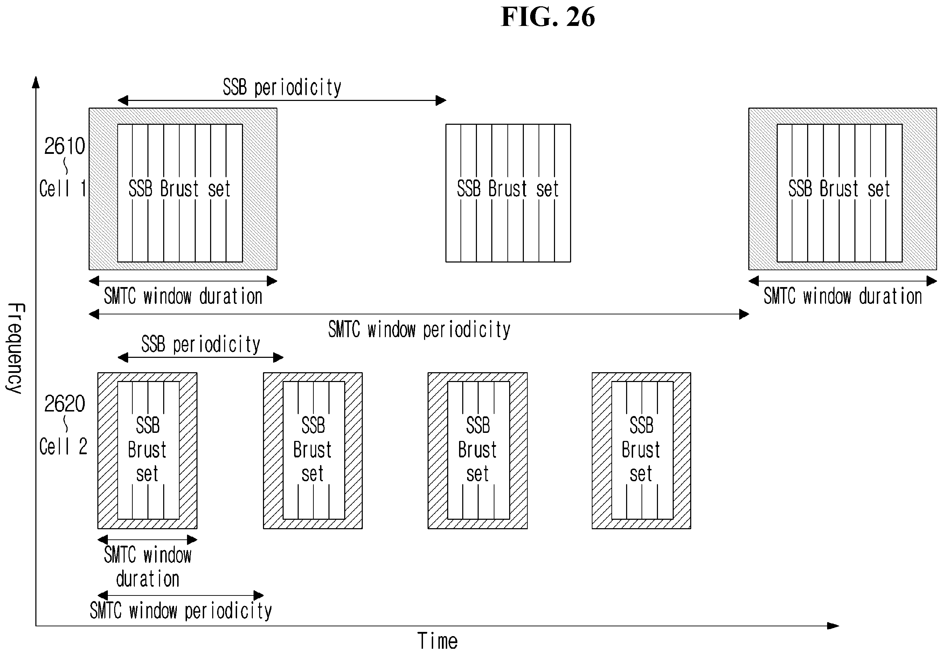

FIG. 26 illustrates an SSB based measurement timing configuration (SMTC) window configuration configured in a network for measuring a specific frequency applicable to the present disclosure.

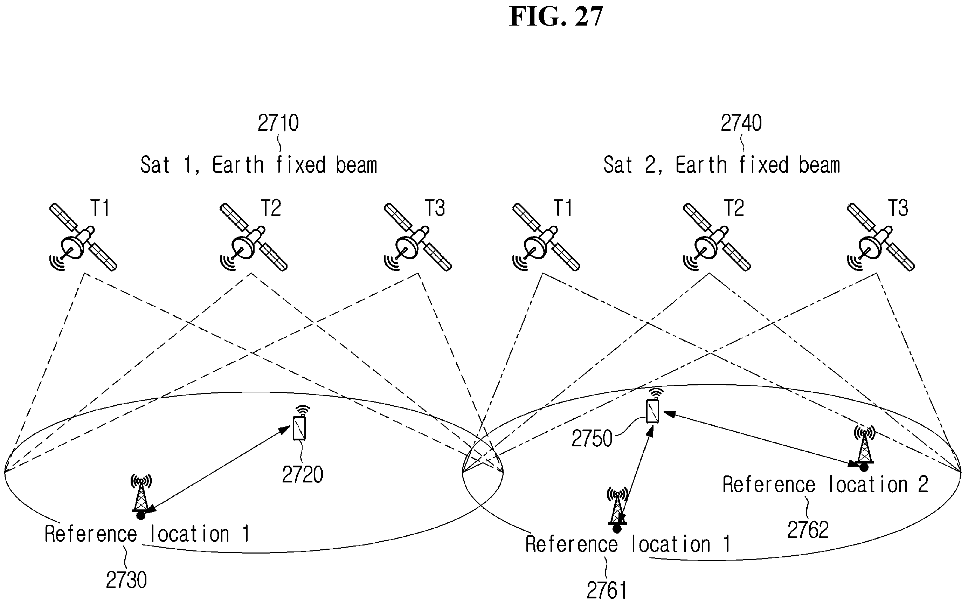

FIG. 27 illustrates a method of performing a cell search based on a neighboring TN cell reference location applicable to the present disclosure. Referring to FIG. 27, the UE

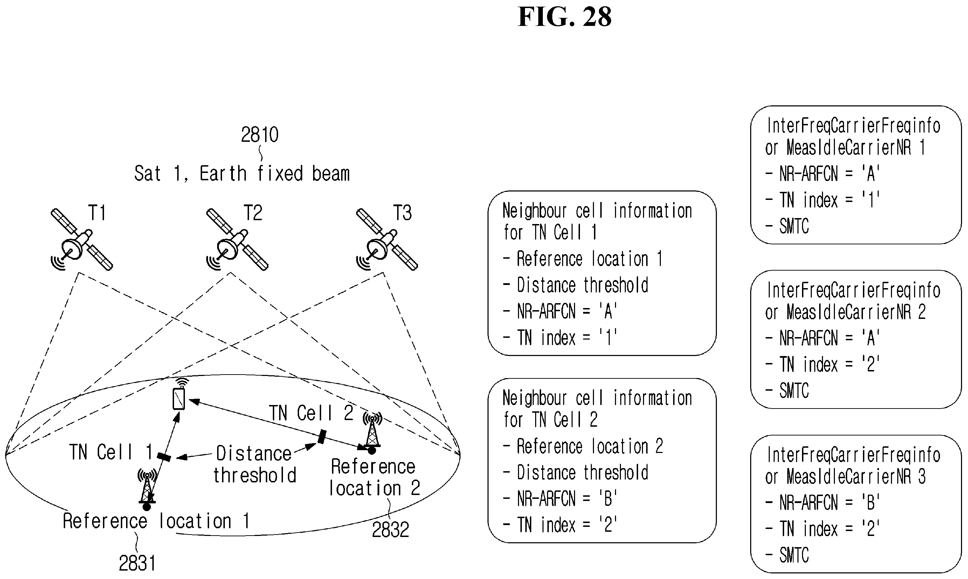

FIG. 28 illustrates a TN cell configuration applicable to the present disclosure. As described above, information on a TN neighboring cell and information for cell reselection may be related. For example,

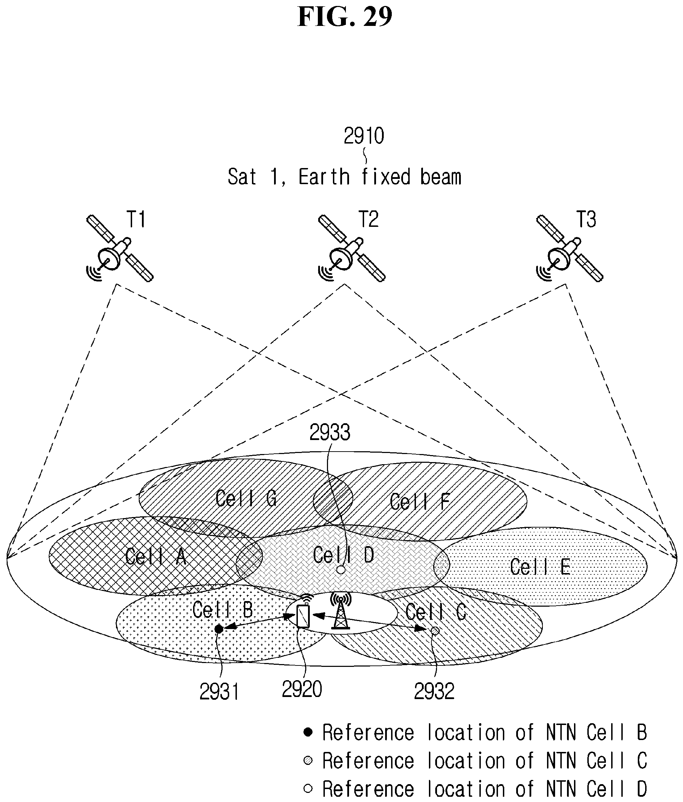

FIG. 29 illustrates an NTN cell reference location applicable to the present disclosure.

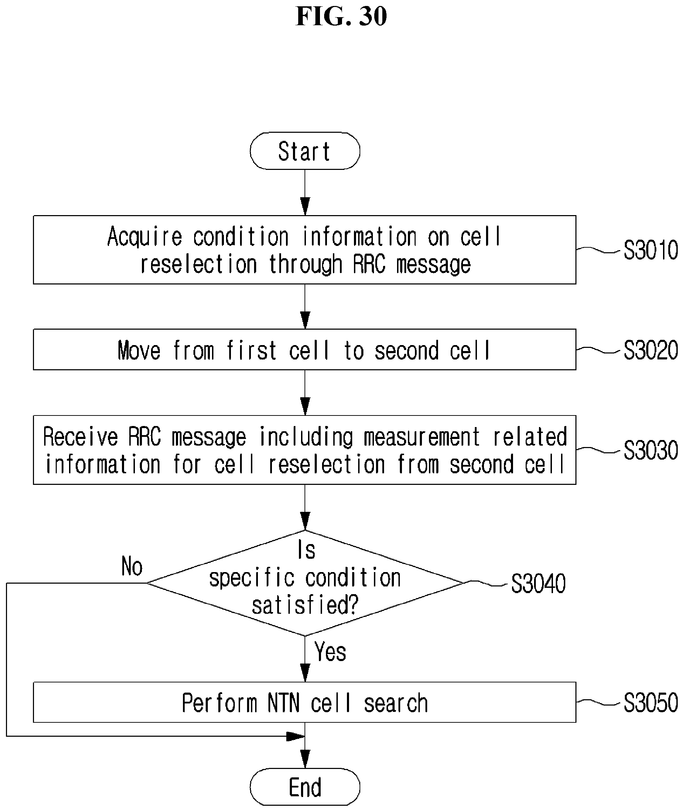

FIG. 30 is a flowchart illustrating a method of performing a conditional NTN cell search applicable to the present disclosure.

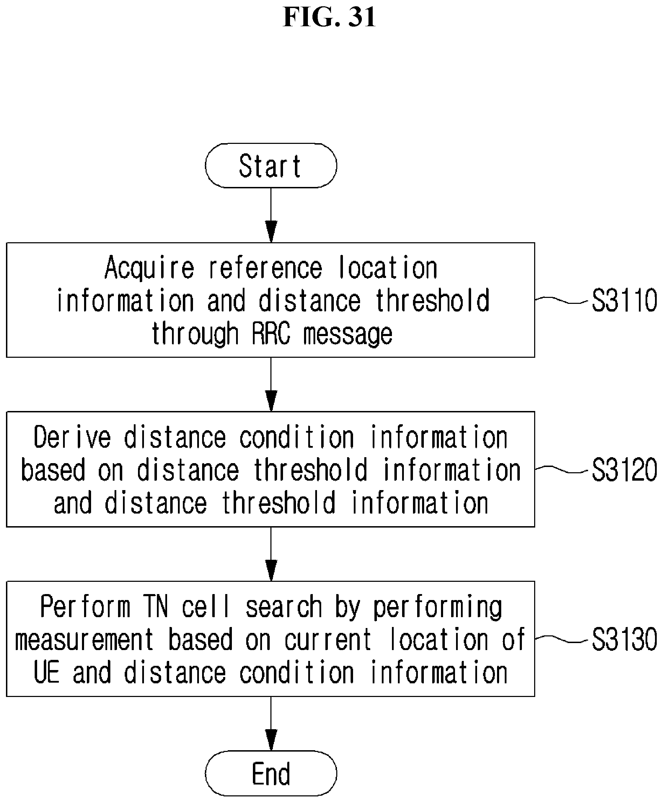

FIG. 31 is a flowchart illustrating a method of performing a conditional TN cell search to which the present disclosure may apply.

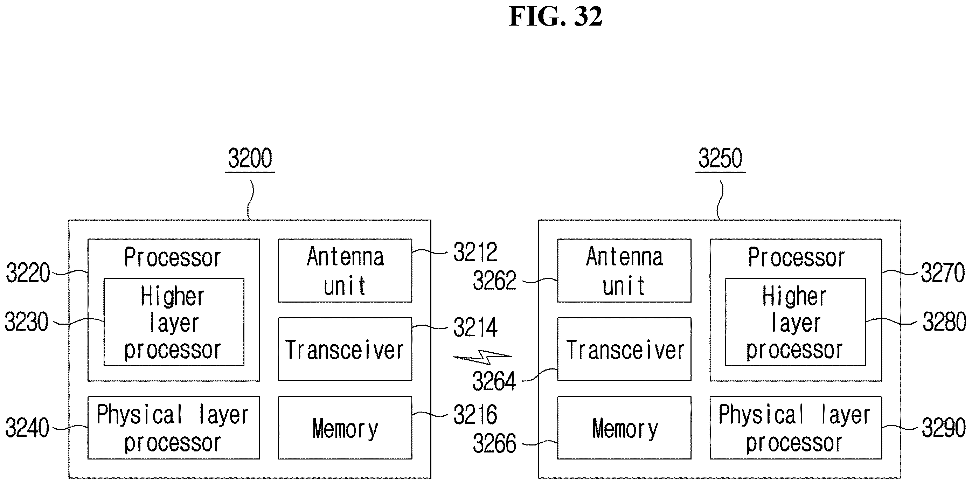

FIG. 32 is a diagram illustrating a device configuration to which the present disclosure may apply.

BEST MODE

Various examples of the present disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

In describing the examples of the present disclosure, a detailed description on known configurations or functions may be omitted for clarity and conciseness. Throughout the drawings and the detailed description, unless otherwise described, the same drawing reference numerals are understood to refer to the same elements, features, and structures.

It will be understood that when an element is referred to as being "connected to," "coupled to," or "accessed to" another element, it can be directly connected, coupled, or accessed to the other element or the intervening elements may be present. Also, it will be further understood that when an element is described to "comprise/include" or "have" another element, it specifies the presence of another element, but does not preclude the presence of another element uncles otherwise described.

Further, the terms, such as first, second, and the like, may be used herein to describe the elements in the description herein. These terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent the elements as necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the present disclosure.

Herein, the elements described in various examples may not be necessarily essential and may be partially selectable. Therefore, an example including a partial set of elements described in an example is also included in the scope of the present disclosure. Also, an example that additionally includes another element to the elements described in various examples is also included in the scope of the present disclosure.

The description described herein is related to a wireless communication network, and an operation performed in a wireless communication network may be performed in the process of controlling a network and transmitting data by a system that controls a wireless network, e.g., a base station, or may be performed in a user equipment

It is apparent that various operations performed for communication with a UE in a network including a base station and a plurality of network nodes may be performed by the base station or by other network nodes in addition to the base station. Here, the term "base station (BS)' may be interchangeably used with other terms, for example, a fixed station, a Node B, an eNodeB (eNB), a gNodeB (gNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes the meaning of transmitting or receiving information or a signal through the corresponding channel. For example, transmitting a control channel indicates transmitting control information or a signal through the control channel. Likewise, transmitting a data channel indicates transmitting data information or a signal through the data channel.

In the following description, although the term "new radio (NR) system" is used to distinguish a system according to various examples of the present disclosure from the existing system, the scope of the present disclosure is not limited thereto.

A new radio (NR) system supports various subcarrier spacings (SCSs) by considering various scenarios, service requirements, potential system compatibility, and the like. Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Here, the 5G mobile communication technology may be defined by including the existing Long Term Evolution-Advanced (LTE-A) system as well as the aforementioned NR system. That is, the 5G mobile communication technology may operate by considering the backward compatibility with a previous system as well as a newly defined NR system. Therefore, following the 5G mobile communication may include technology operating based on the NR system and a technology operating based on a previous system (e.g., LTE-A, LTE), but is not limited to a specific system.

First of all, the physical resource structure of the NR system to which the present disclosure is applied will be briefly described.

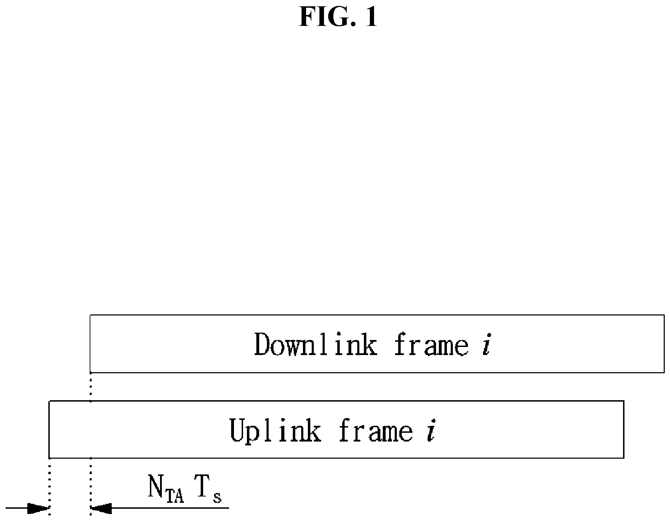

FIG. 1 illustrates an example of an NR frame structure according to an example of the present disclosure.

In the NR, a basic unit of a time domain may be $T_c = 1/(\Delta f_{max} \cdot N_f)$. Here, $\Delta f_{max} = 480 \cdot 10^3$ and $N_f = 4096$. Also, $\kappa = T_s/T_c = 64$ may be a constant in a multiple relationship between an NR time unit and an LTE time unit. In LTE, $T_s = 1/(\Delta f_{ref} \cdot N_{f,ref})$, $\Delta f_{ref} = 15 \cdot 10^3$ and $N_{f,ref} = 2048$ may be defined as a reference time unit. The constants for the multiple relationship between the NR time base unit and the LTE time base unit may be defined as k=Ts/Tc=64.

Referring to FIG. 1, a time structure of a frame for a downlink/uplink (DL/UL) transmission may include $T_f = (\Delta f_{max} N_f/100) \cdot T_s = 10$ms. Here, a single frame may include 10 subframes corresponding to $T_{sf} = (\Delta f_{max} N_f/1000) \cdot T_s = 1$ms. A number of consecutive orthogonal frequency division multiplexing (OFDM) symbols per subframe may be

$$N_{symb}^{subframe,\mu} = N_{symb}^{slot} N_{slot}^{subframe,\mu}$$

. Also, each frame may be divided into two half frames and the half frames may include 0~4 subframes and 5~9 subframes. Here, the half frame 1 may include 0~4 subframes and the half frame 2 may include 5~9 subframes.

The NTA represents the timing advance (TA) between downlink (DL) and uplink (UL). Here, a transmission timing of the uplink transmission frame i is determined based on a downlink reception timing at a UE according to the following Equation 1.

[Equation 1]

$$T_{TA} = \left(N_{TA} + N_{TA,offset}\right)T_c$$

The $N_{TA,offset}$ denotes a TA offset value occurring due to a duplex mode difference and the like. Basically, in a frequency division duplex (FDD), $N_{TA,offset}=0$. In a time division duplex (TDD), $N_{TA,offset}$ may be defined as a fixed value by considering a margin for a DL-UL switching time. For example, in the TDD (Time Division Duplex) of RF1 (Frequency Range 1) which is a sub-6GHz or less frequency, NTA,offset may be 39936TC or 2600TC. 39936TC=20.327μs and 25600TC=13.030μs. Also, in FR2 (Frequency Range 2) which is millimeter wave (mmWave), the NTA,offset may be 13792TC. At this time, 39936TC=7.020 μs.

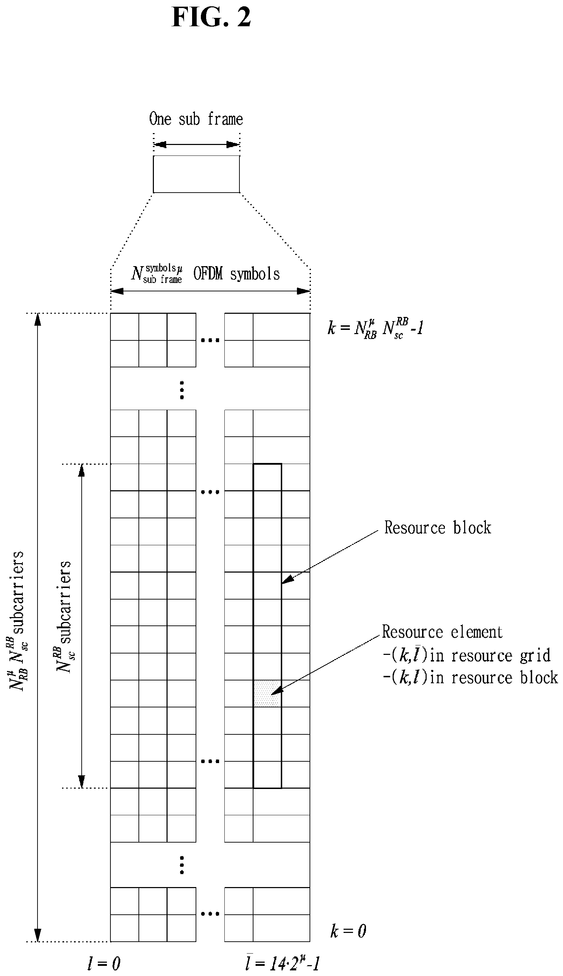

FIG.2 illustrates an NR resource structure to which the present disclosure may apply.

A resource element within a resource grid may be indexed based on each subcarrier spacing. Here, a single resource grid may be generated for each antenna port and for each subcarrier spacing. The uplink/downlink transmission and reception may be performed based on a corresponding resource grid.

A resource block (RB) on a frequency domain is configured of 12 REs and for every 12 Res, an index for one RB (nPRB) may be configured. The index for RB may be utilized within a specific frequency band or system bandwidth. The index for RB may be defined as shown in Equation 2 below. Here, the NRBsc represents the number of subcarriers per one RB and k represents the subcarrier index.

[Equation 2]

$$n_{PRB} = \left\lfloor \frac{k}{N_{sc}^{RB}} \right\rfloor$$

Numerologies may be variously configured to meet the various services and requirements of the NR system. For example, one subcarrier spacing (SCS) may be supported in the LTE/LTE-A system, but a plurality of SCS may also be supported in the NR system.

A new numerology for the NR system that supports the plurality of SCSs may operate in a frequency range or carrier, such as 3 GHz or less, 3 GHz-6 GHz, 6 GHZ-52.6 GHz, or 52.6 GHz or more, to solve the issue that a wide bandwidth is unavailable in a frequency range or carrier such as 700 MHz or 2 GHz

Table 1 below shows an example of the numerologies supported by the NR system.

[Table 1]

| $\mu$ | $\Delta f = 2^{\mu} \cdot 15[kHz]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Referring to the above Table 1, the numerologies may be defined based on an SCS, a cyclic prefix (CP) length, and a number of OFDM symbols per slot, which are used in an OFDM system. The aforementioned values may be provided to a UE through the higher layer parameters, DL-BWP-mu and DL-BWP-cp, for the downlink, and through the higher layer parameter, UL-BWP-mu and UL-BWP-cp, for the uplink.

In the above Table 1, if $\mu = 2$ and SCS = 60 kHz, a normal CP and an extended CP may be applied. In other bands, only the normal CP may be applied.

Here, a normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for the length of another time section. Here, for the coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having the number of symbols less by at least one symbol than that of the normal slot. For example, in the case of providing a low latency such as an Ultra-Reliable and Low Latency Communications (URLLC) service, the latency may decrease through the non-slot having the number of slots less than that of the normal slot. Here, the number of the OFDM symbols included in the non-slot may be determined based on a frequency range. For example, a non-slot with 1 OFDM symbol length may be considered in the frequency range of 6 GHz or more. As another example, the number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7, as a non-slot standard, it is provided as an example only.

Also, for example, an SCS corresponding to $\mu = 1$ and 2 may be used in the unlicensed band of 6 GHz or less and an SCS corresponding to $\mu = 3$ and 4 may be used in the unlicensed band above 6 GHz. Here, for example, if $\mu = 4$, it may be used for a synchronization signal block (SSB).

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows a number of OFDM symbols per slot ( $N_{symb}^{slot}$ ), a number of slots per frame ( $N_{slot}^{frame,\mu}$ ), and a number of slots per subframe ( $N_{slot}^{subframe,\mu}$ ) for the normal CP by the subcarrier spacing setting. In Table 2, the values are based on the normal slot having 14 OFDM symbols.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Table 3, in the case of the extended CP applied (that is, $\mu$ = 2 and SCS = 60 kHz), shows the number of slots per frame and the number of slots per subframe based on the normal slot for which the number of OFDM symbols per slot is 12.

As described above, a single subframe may correspond to 1 ms on a time axis. Also, a single slot may correspond to 14 symbols on the time axis. For example, a single slot may correspond to 7 symbols on the time axis. Therefore, the number of slots and the number of symbols that may be considered may be differently set within 10 ms corresponding to a single radio frame. Table 4 may show the number of slots and the number of symbols according to each SCS. Although the SCS of 480kHz may not be considered in Table 4, the present disclosure is not limited to such examples.

[Table 4]

| SCS | slots in 10ms | slots in 10ms | symbols in 10 ms |
|---|---|---|---|
| 15kHz | 10 | 20 | 140 |
| 30kHz | 20 | 40 | 280 |
| 60kHz | 40 | 80 | 560 |
| 120kHz | 80 | N/A | 1120 |
| 240kHz | 160 | N/A | 2240 |
| 480kHz | 320 | N/A | 4480 |

Also, for example, in the existing wireless communication system, communication may be able to be performed based on terrestrial networks including a UE present on the ground and base stations present on the ground. The UE may access a network in a wireless manner. Here, when the UE moved, the UE was able to continuously receive the same service through another base station within a ground network. The UE was able to access the network and then access a specific service server through other wired or Internet networks. Also, the UE was able to receive a service connecting wired or wireless communication with another UE through the network.

However, a new wireless communication system may support communication of the UE not only through terrestrial networks but also through non-terrestrial networks (NTN). Here, NTN may refer to networks or some of the networks each using a mobile object floating in the air or space equipped with a base station or relay equipment. For example, NTN may support device-to-device communication services based on artificial satellites equipped with a communication function in low Earth orbit (LEO) and geostationary Earth orbit (GEO). As another example, NTN may support device-to-device communication services based on aircraft equipped with a communication function within unmanned aircraft systems (UAS), but are not limited thereto.

In the following, terrestrial networks (TN) are distinguishably described compared to non-terrestrial networks (NTN). That is, in the existing communication system, only terrestrial networks were present, so there was no need to distinguish them. On the other hand, in the following, NTN and TN are distinguished and described as a communication system capable of performing device-to-device communication based on NTN and, based thereon, a method of supporting device-to-device communication services is described.

For example, wireless communication services between a terrestrial base station and a wireless terminal or between mobile base stations are described as a mobile service, but are not limited thereto. Also, communication between mobile terrestrial base stations and one or more space base stations may be mobile satellite services. Also, wireless communication services between mobile terrestrial base stations and space base stations or between mobile terrestrial base stations through at least one space base station may be mobile satellite services, but are not limited thereto.

In the following, described is a method of performing communication based on a wireless communication system that supports all of mobile services and mobile satellite services. For example, technologies for NTN have been specifically introduced for satellite communication, but NTN may be introduced in a communication system (e.g., 5G system) of TN to operate together with TN. Here, the UE may simultaneously support NTN and TN. For the UE that simultaneously supports NTN and TN, the wireless communication system may require specific technologies for NTN in addition to long-term evolution (LTE) and new radio (NR) systems that are radio access technology (RAT), and a method for this is described below. For example, the following may be definition for each term in relation to NTN and TN.

**Non-terrestrial networks (NTN):**

They are networks or some of the networks each using a mobile object floating in the air or space equipped with a base station or relay equipment for communication.

**NTN gateway:**

It is a terrestrial base station or gateway present on the Earth's surface and equipped with radio access equipment enough to access a satellite. In general, the NTN gateway may be a transport network layer node (TNL).

**Feeder link:**

It is a radio link between an NTN gateway and a satellite.

**Geostationary Earth orbit (GEO):**

It is circular orbit 35,786 km above the Earth's equator, which matches the direction of Earth's rotation. An object or a satellite in orbit orbits with the same period as the Earth's rotation period. Therefore, when observed from the Earth, it appears to be present at a fixed location without movement.

**Low Earth orbit (LEO):**

It is orbit between 300 km and 1500 km above the ground.

**Medium Earth orbit (MEO):**

It is orbit present between LEO and GEO.

**Unmanned Aircraft Systems (UAS):**

UAS are systems that generally operate at 8 km to 50 km above the ground, which may include High Altitude Platforms (HAPs). UAS may include at least one of Tethered UAS (TUA), Lighter Than Air UAS (LTA), and Heavier Than Air UAS (HTA) systems.

**Minimum elevation angle:**

It is a minimum angle required for a terrestrial terminal to face a satellite or a UAS base station present in the air.

**Mobile services:**

They are wireless communication services between a terrestrial base station and a wireless terminal or between mobile base stations.

**Mobile satellite services:**

They may be wireless communication services between mobile terrestrial base stations and one or more space base stations, between mobile terrestrial base stations and space base stations, or between mobile terrestrial base stations through at least one space base station.

**Non-geostationary satellites:**

They are satellites in LEO and MEO, and may be satellites that orbit the Earth with a period of about 1.5 to 10 hours.

**On board processing:**

It is digital processing of an uplink radio frequency (RF) signal mounted to satellite or non-terrestrial equipment.

**Transparent payload:**

It may imply changing a carrier frequency of an uplink RF signal and filtering and amplifying the same before transmitting the same through downlink.

**Regenerative payload:**

It relates to transforming and amplifying an uplink RF signal before transmitting the same through downlink and transformation of a signal may include digital processing such as decoding, demodulation, re-modulation, re-encoding, and filtering.

**On board NTN base station (gNB):**

It may imply an on-board satellite in which a base station (gNB) is implemented in a regenerative payload structure.

**On ground NTN base station (gNB):**

It is a terrestrial base station in which a base station (gNB) is implemented in a transparent payload structure.

**One-way latency:**

It is an amount of time used to reach from a wireless terminal to a public data network or from the public data network to the wireless terminal in a wireless communication system.

**Round trip delay (RTD):**

It may be an amount of time used for an arbitrary signal to reach from a wireless terminal to an NTN-gateway or from the NTN-gateway to the wireless terminal and then return. Here, the returned signal may be a signal that contains a form or a message different from the arbitrary signal.

**Satellite:**

It may be a mobile object in the space equipped with a wireless communication transceiver capable of supporting transparent payload or regenerative payload, and may be generally located in LEO, MEO, or GEO.

**Satellite beam:**

It is a beam generated by an antenna of an on-board satellite.

**Service link:**

It is a radio link between a satellite and a UE.

**User connectivity:**

It is capability to configure and maintain data/voice/video transmission between a network and a UE.

**User throughput:**

It is a data transmission rate provided to a UE.

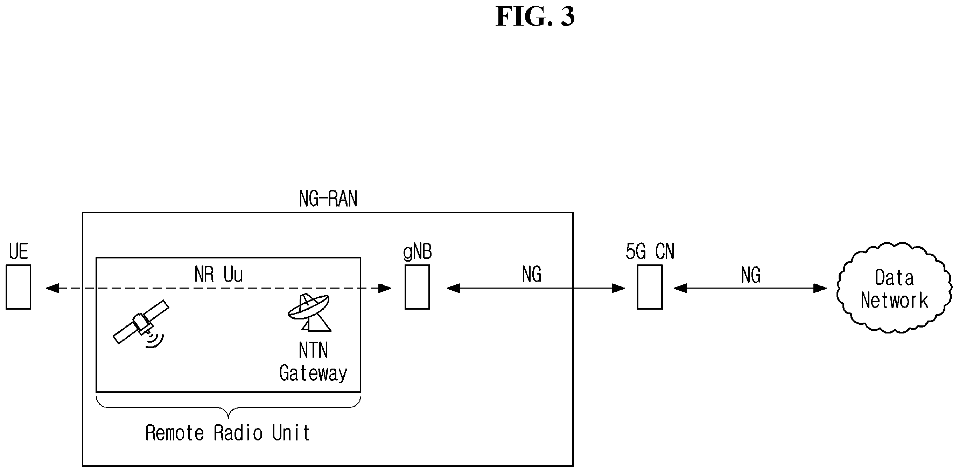

FIG. 3 illustrates NTN including a transparent satellite to which the present disclosure may apply.
Referring to FIG. 3, a UE included in NTN may include a terrestrial network terminal. For example, UEs of NTN and TN may include manned or unmanned mobile objects, such as ships, trains, buses, and airplanes, and may not be limited to a specific form. Referring to FIG. 3, transparent satellite payload generated through a network that includes the transparent satellite may be implemented in a manner equivalent to an RF repeater.
In more detail, the network including the transparent satellite may perform frequency conversion and amplification for wireless signals received in both uplink and downlink directions and may transmit wireless signals. Therefore, the satellite may perform the functionality of relaying an NR-Uu radio interface that includes both feeder link and service link directions, and the NR-Uu radio interface is described below.

As another example, referring to FIG. 3, a satellite radio interface (SRI) in feeder link may be included in an NR-Uu interface. That is, the satellite may not be an endpoint of the NR-Uu interface. Here, an NTN gateway may support all functions required to transmit signals defined in the NR-Uu interface. For example, other transparent satellites may be connected to the same base station on the ground. That is, a plurality of transparent satellites may be configured to be connected to a single terrestrial base station. The base station may be eNB or gNB, but may not be limited to a specific form.

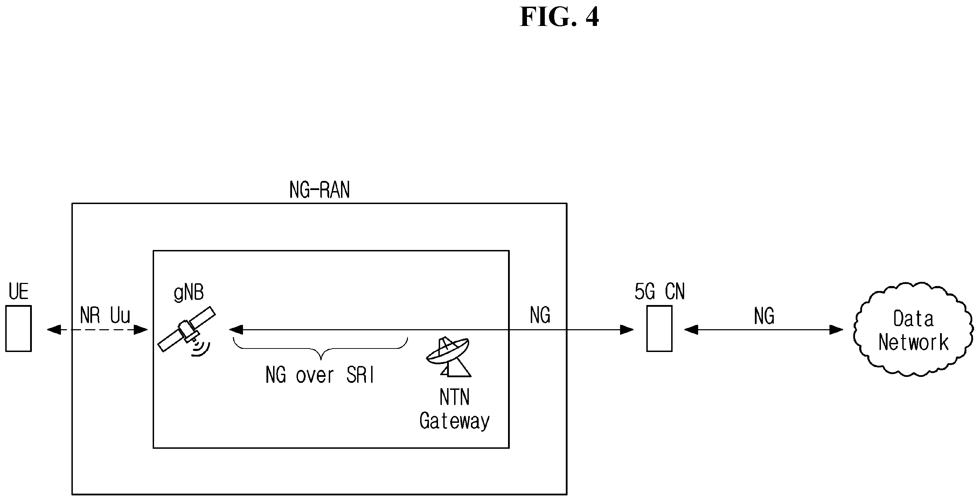

FIG. 4 illustrates NTN including a regenerative satellite without inter-satellite links (ISL) to which the present disclosure may apply.

Referring to FIG. 4, NTN may include a regenerative satellite. Here, the regenerative satellite may imply that a base station function is included within the satellite. For example, regenerative satellite payload generated through a network that includes the regenerative satellite may be implemented in a manner of regenerating a signal received from the ground.

In more detail, the regenerative satellite may receive a signal from the ground based on an NR-Uu radio interface between a UE and the satellite. As another example, the regenerative satellite may receive a signal from the ground through an SRI in feeder link between NTN gateways. Here, the SRI may be defined in a transport layer between the satellite and the NTN gateway. The transport layer may refer to the transport layer among layers defined as OSI 7 layers. That is, a signal from the ground may be transformed through digital processing, such as decoding, demodulation, remodulation, re-encoding, and filtering, based on the regenerative satellite, but is not limited thereto.

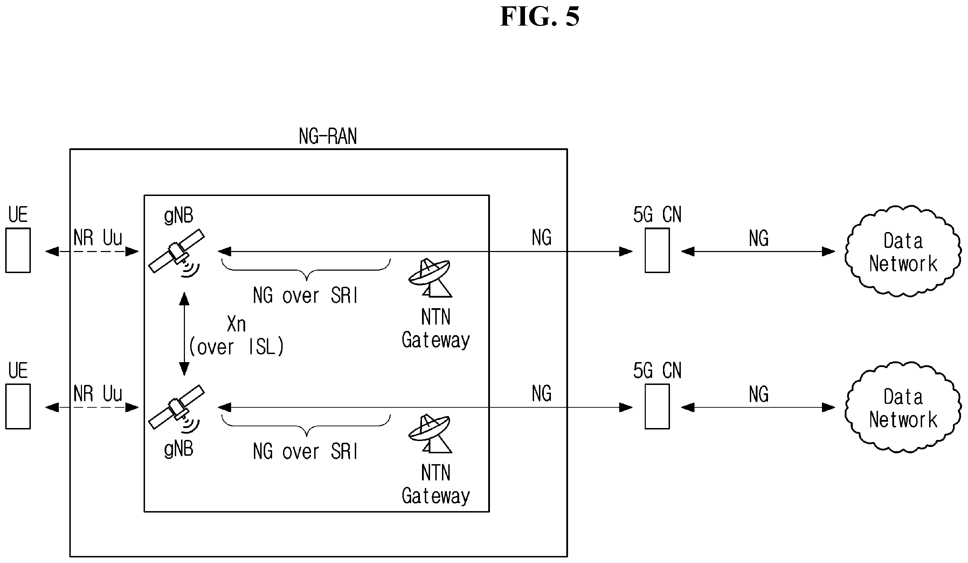

FIG. 5 illustrates NTN including a regenerative satellite with ISL to which the present disclosure may apply.

Referring to FIG. 5, ISL may be defined in a transport layer. As another example, ISL may be defined as a radio interface or a visible light interface, but are not limited to a specific embodiment. Here, an NTN gateway may support all functions of a transport protocol. Also, each regenerative satellite may become a base station and a plurality of regenerative satellites may be connected to the same 5G core network present on the ground.

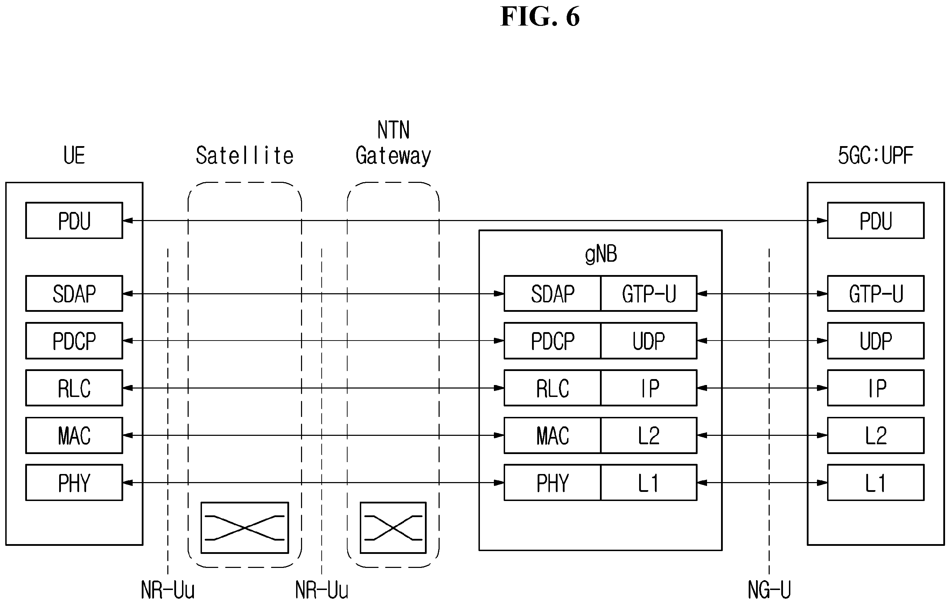

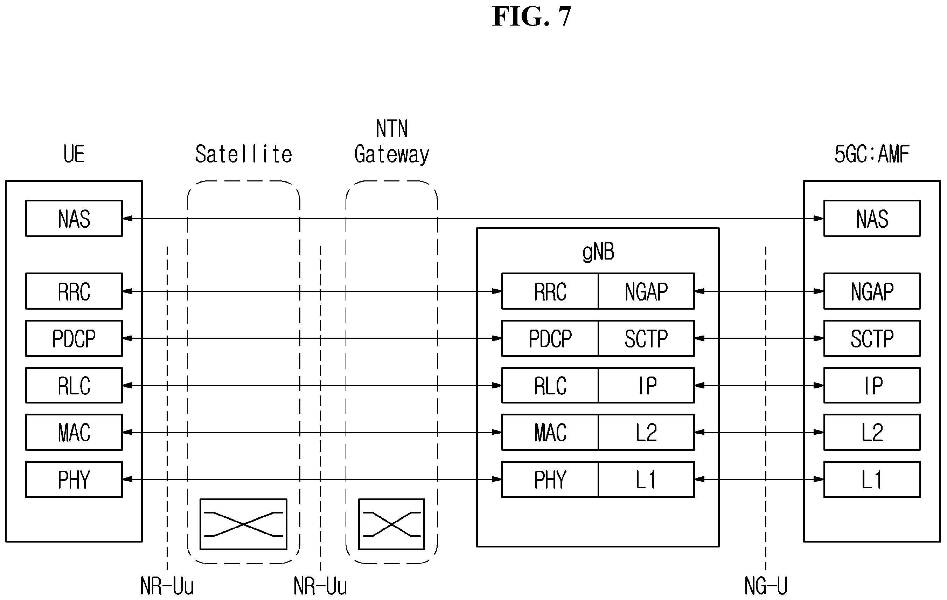

FIG. 6 illustrates a user plane (UP) protocol stack structure in NTN including a transparent satellite to which the present disclosure may apply. Also, FIG. 7 illustrates a control plane (CP) protocol stack structure in NTN including a transparent satellite to which the present disclosure may apply.

An NR Uu interface may be an interface defined as protocols for wireless connection between a UE and a baes station in an NR system. Here, the NR Uu interface may include a user plane defined as protocols for user data transmission, including NTN. Also, the NR Uu interface may include a control plane defined as protocols for transmitting signaling containing radio resource control information, including NTN. For example, a Medium Access Control (MAC) layer may be configured based on Radio Link Control (RLC), Packet Data Convergence Protocol (PDCP), Service Data Adaptation Protocol (SDAP), and Radio Resource Control (RRC). A protocol for each layer may be defined based on NR among 3GPP RAN-related standards, but may not be limited thereto.

For example, FIG. 6 may be a transparent satellite-based UP protocol stack structure. That is, in the satellite and the NTN gateway, only frequency conversion and amplification may be performed for a transparently received wireless signal and then, the signal may be transmitted. Also, FIG. 7 may be a transparent satellite-based CP protocol stack structure. That is, in the satellite and the NTN gateway, only frequency conversion and amplification may be performed for a transparently received wireless signal.

Based on the above, a wireless communication system that supports communication between UEs with NTN and TN may be considered. Here, NTN may have larger roundtrip time (RTT) between a UE and a base station compared to the existing TN. Therefore, from the UP perspective, the UE may need to store data to be transmitted through each of uplink and downlink in a buffer for a longer period of time due to an increase in RTT. That is, the UE may need to store more data in the buffer. Therefore, the UE may require a larger capacity of memory than before, which is described below.

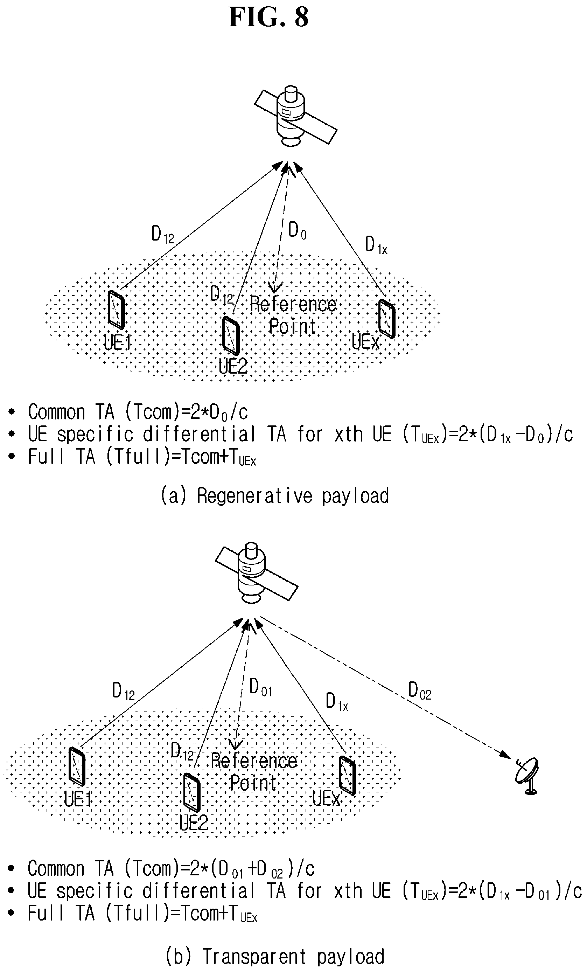

FIG. 8 illustrates a timing advance calculation method to which the present disclosure may apply. As described above, since a satellite included in NTN is located in the sky, signal RTT may increase. For example, in the case of LEO, the satellite may be present at the altitude of 300 km to 1200 km and in the case of GEO, the satellite may be present at the altitude of 36,000 km or more above the equator. Therefore, propagation delay in NTN may be significantly greater than that in TN. On the other hand, since NTN are present in the sky, cell coverage may be greater than that of terrestrial networks.

That is, since NTN may have different RTT and cell coverage compared to TN, there is a need to newly define a method of acquiring time synchronization for uplink transmission in NTN. For example, FIG. 8 may be a method of calculating a TA value generated according to a satellite payload type.

In more detail, (a) of FIG. 8 may be a method of calculating a timing advance (TA) value when a satellite payload type is regenerative payload. Also, (b) of FIG. 8 may be a method of calculating a TA value when the satellite payload type is transparent payload.

Here, for initial access and continuous maintenance of a timing advance (TA) value, a case in which the UE is aware of satellite ephemeris and a location of the UE may be considered. Here, the satellite ephemeris may indicate a distance between each satellite and a receiver and location information of each satellite. For example, the UE may acquire a TA value on its own and then apply the same (hereinafter, option 1). As another example, the UE may receive instruction for TA compensation and correction from the network (hereinafter, option 2).

For example, referring to (a) of FIG. 8, when the satellite payload type is regenerative payload, the satellite may directly serve as a base station. Here, the UE may calculate a TA value required for uplink transmission including a physical random access channel (PRACH). The UE may calculate a common TA value ($T_{COM}$) and a UE specific TA value ($T_{UEx}$). For example, the common TA value ($T_{COM}$) may be a TA value necessary for all UEs generated due to large cell coverage and long RTT of NTT. That is, since NTT are present in the sky and have a relatively longer distance than a distance between UEs, the common TA value ($T_{COM}$) that considers the long RTT in cell coverage may be required. Also, the UE specific TA value ($T_{UEx}$) may be a value generated due to a difference in a location of each UE within cell coverage. If the UE verifies a location of a satellite corresponding to a specific time in advance through satellite ephemeris stored in advance or received from NTN and is aware of a location of the UE, the UE may calculate a distance between the satellite and the corresponding UE at the specific time. Therefore, the UE may acquire the TA value on its own and then correct the TA value and, through this, may determine the TA value.

Through the aforementioned description, the UE may perform UE-to-UE uplink timing alignment received from the base station as full TA compensation.

As another example, the UE may perform downlink and uplink frame timing alignment on the network side. When the satellite payload type is transparent payload as shown in (b) of FIG. 8, the satellite may perform filtering and amplification of a wireless signal and may transmit the signal to the NTN gateway. That is, the satellite may operate like an RF repeater. Here, in some cases, the NTN gateway may need to be changed based on continuous movement of the satellite. In (b) of FIG. 8, the common TA value ($T_{COM}$) may be determined based on a sum of distance $D_{01}$ between a reference location (reference point) and the satellite and distance $D_{02}$ between the satellite and the NTN gateway. Here, feeder link may change in response to a change in the NTN gateway based on movement of the satellite. That is, a distance between the satellite and the NTN gateway may vary based on the changed feeder link. Therefore, the common TA value may be changed, and update needs to be performed in the corresponding UE. Also, in the case of setting offset between downlink frame timing and uplink frame timing in the network, a case in which a TA value generated due to feeder link is not corrected using a full TA compensation method may need to be additionally considered. Also, when the UE is capable of calculating only a UE specific differential TA value ($T_{UEx}$), the UE needs to verify a single reference location (reference point) for each beam or each cell and needs to transmit corresponding information to other UEs. In the case of setting offset between downlink frame timing and uplink frame timing in the network, the network needs to manage offset information regardless of the satellite payload type. Here, for example, the network may also provide a value for TA correction to each UE, and is not limited to the aforementioned embodiment.

As another example, a method of indicating TA compensation and correction in a network (option 2) may be considered. Here, a common TA value may be generated based on common elements for propagation delay shared by all UEs present within coverage of cell or beam of a satellite. The network may transmit the common TA value to UEs for each cell or beam of each satellite based on a broadcast method. The common TA value may be calculated in the network, assuming at least one reference location for each cell or beam of each satellite. Also, a UE-specific TA value ($T_{UEx}$) may be determined based on a random access procedure defined in the existing communication system (e.g., Release 15 or Release 16 of existing NR system). Here, for example, in the case of applying a long TA value and a negative TA value, a new field may be required in a random access message. For example, when the network provides a timing change rate to the UE, the UE may support TA value correction based on the timing change rate.

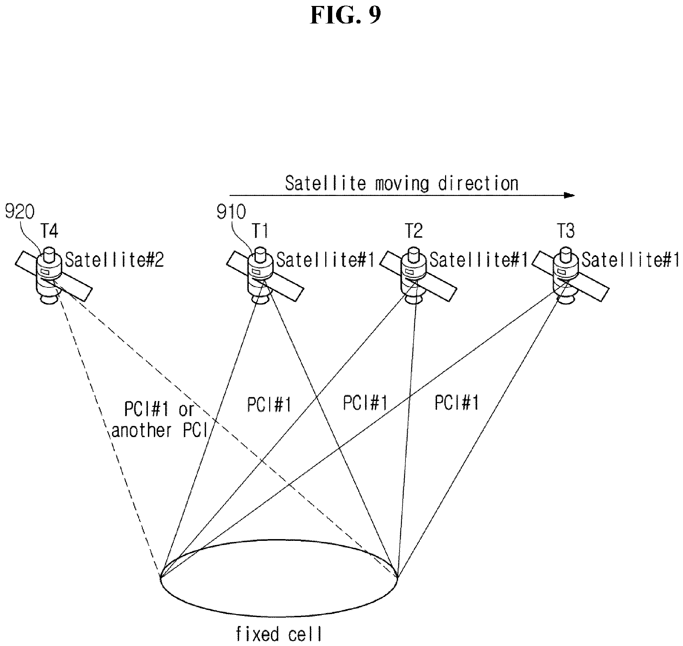

FIG. 9 illustrates an earth fixed cell scenario to which the present disclosure may apply.

Referring to FIG. 9, a fixed cell may be a cell in which a location of a signal transmitted from a satellite is fixed. For example, since the satellite moves over time, antennas and beams need to vary to ensure service coverage is fixed at a specific location, thereby making it possible to maintain the fixed cell. Here, for example, in FIG. 9, a satellite 1 910 may maintain the fixed cell while changing antennas and beams during T1 to T3. Here, if a specific time (T4) elapses, the satellite 1 910 may no longer service the corresponding location and the satellite 2 920 may provide services at the corresponding location, thereby maintaining service continuity. Here, after time T4, a cell or a beam of the satellite 2 920 that services the same location as the location at which the satellite 1 910 provides services in the previous time (T1 to T3) may maintain characteristics of a cell or a beam of the satellite 1 910, and is not limited to the aforementioned embodiment.

As a more detailed example, in the case of providing services through the satellite 1 910 and the satellite 2 920, at least one of a physical cell id (PCI) value and system information may remain the same. That is, as a cell with fixed service coverage, configuration may be generally performed based on satellites capable of changing the angle of an antenna and a beam among satellites in LEO and MEO excluding GEO.

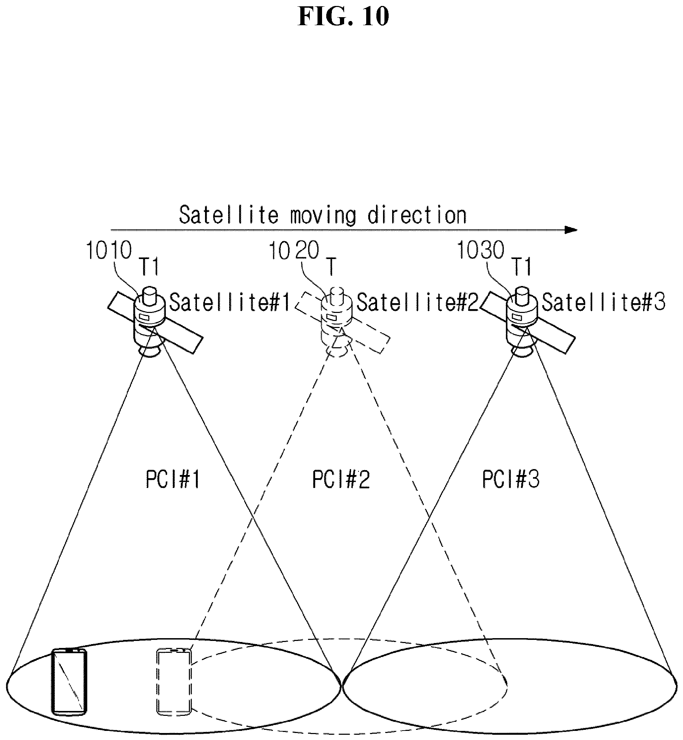

On the other hand, FIG. 10 illustrates an earth moving cell scenario to which the present disclosure may apply. For example, a cell with moving serving coverage may be an earth moving cell.

For example, referring to FIG. 10, each of a satellite#1 1010, a satellite#2 1020, and a satellite#3 1030 may provide services to its own cell with different PCI. Here, an earth moving cell may be in the form in which an antenna and a beam used for a satellite to transmit a signal to the ground are fixed and service coverage changes as the satellite moves over time. The earth moving cell may be configured based on satellites with the fixed angle of antenna and beam among satellites in LEO and MEO excluding GEO. Here, the corresponding satellites may have advantages, such as low price and low failure rate compared to satellites capable of adjusting the angle of antenna and beam.

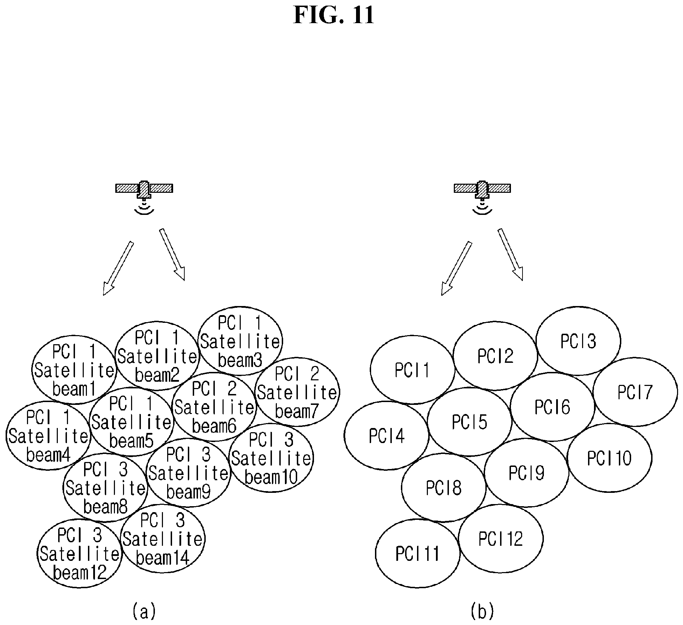

Also, FIG. 11 illustrates a method of mapping PCI to satellite beams to which the present disclosure may apply.

For example, the PCI may refer to an index that may logically identify a single cell. That is, beams with the same PCI value may be included in the same cell. For example, referring to (a) of FIG. 11, a single PCI may be assigned to a plurality of satellite beams. On the other hand, referring to (b) of FIG. 11, a single PCI may be assigned to each satellite beam from a single satellite. For example, a satellite beam may include one or more synchronization signal block (SSB) (SS/PBCH block) beams. A single cell (or PCI) may include up to L SSB beams. Here, L may be 4, 8, 64, or 256 according to a size of frequency band and/or subcarrier band, but is not limited to the aforementioned embodiment. That is, for L, similar to terrestrial networks (TN) corresponding to the existing communication system (NR system), one or more SBS indexes may be used for each PCI. Through this, SSBs transmitted through different beams may be distinguished, and an SSB index may be mapped to a logically defined antenna port or a physically separately formed beam.

For example, an NTN accessible UE may be a UE that supports a global navigation satellite system (GNSS) function. However, the NTN accessible UE may include a UE that does not support the GNSS function. As another example, NTN may support a UE that supports the GNSS function, but does not secure location information through the GNSS, and is not limited to the aforementioned embodiment.

As described above, the UE may perform communication through NTN. For example, the UE may receive 5G/B5G NTN-based services. Through this, the UE may escape regional, environmental, spatial, and economic constraints for radio access services (e.g., LTE, NR, WiFi, etc.) based on installation of terrestrial networks equipment. For example, based on the above, advanced radio access technology provided from terrestrial networks may be applied to non-terrestrial networks platforms (e.g., satellite and UAV). Through this, various radio access service products and technologies may be provided with advanced network technology.

The NTN platform may be equipped with an NR signal relay function or a base station (gNB, eNB) function in space or at high altitude and may be operated as a kind of mirror. For example, as already mentioned, the function of the NG-RAN-based NTN architecture may be implemented with "Transparent payload-based NTN" and "Regenerative payload-based NTN" structures, which is described above.

Also, for example, NTN technology refers to the expanded network structure and technology of the 5G Integrate Access and Backhaul (IAB) architecture and may be used for wider coverage and more radio access services. Integration of NTN and TN may ensure service continuity and scalability of 5G system.

As a detailed example, NTN and TN integrated networks may provide significant gain in terms of 5G target performance (e.g., user experience data rate and reliability) in urban and suburban areas. As another example, NTN and TN integrated networks may ensure connectivity not only in very dense areas (e.g., concert hall, sport stadium, shopping center, etc.) but also in fast-moving objects such as airplane, high-speed train, and ship. As another example, NTN and TN integrated networks may simultaneously use data transmission services from NTN and TN through a multi-connection function. Here, by selectively utilizing a better network depending on traffic characteristics and traffic loading degree, both efficiency and economic feasibility of 5G wireless transmission services may be achieved.

A UE present on general plain may use wireless data services by simultaneously connecting NTN and TN. Also, the UE may provide wireless data access services for a poor environment or area in which it is difficult to simultaneously connect one or more NTN platforms (e.g., two or more LEO/GEO satellites) and to support the same in TN. Through this, the UE may be utilized in association with various services. In particular, NTN and TN integrated networks may improve reliability of autonomous driving services and perform an efficient network operation, and are not limited to the aforementioned embodiment.

Here, for example, services that may be provided by V2X technology based on LTE mobile communication or standard technology based on IEEE 802.11p standard may have similar limitations. An LTE V2X standard may be provided to meet requirements defined in C-ITS (e.g., time delay of about 100 ms, reliability of about 90%, and generation of messages of tens to hundreds of bytes in size about 10 times per second). Therefore, new V2X services that require low latency, high reliability, and high-capacity data traffic, and improved positioning may be required. Here, for example, standardization of 5G radio access technology (e.g., new radio (NR)) is ongoing based on the above. Also, for example, to more flexibly respond to requirements of new services than LTE, standardization of various numerologies and frame structures and L2/L3 protocol structures corresponding thereto is in progress. By introducing 5G mobile communication technology-based sidelink radio access technology based on the above, it is possible to support improved V2X services, such as autonomous driving or remote driving. To this end, NTN may be utilized.

As another example, NTN may be utilized to support IoT services in a poor environment and area not covered by terrestrial networks. For example, depending on the purpose of use, IoT equipment may need to frequently perform wireless communication with minimal power consumption in a poor channel environment (e.g., mountains, desert, or sea).

The previously proposed cellular-based technology may mainly aim at mobile broad band (MBB) services. Therefore, in terms of radio resource utilization and power control, the efficiency of providing IoT services may be low and flexible operations may not be supported. Also, for example, in the case of non-cellular-based existing IoT technology, there may be limitation in providing various IoT services due to limited mobility support and coverage. Considering the above, NTN may be applied, through which services may be improved.

Also, for example, if 5G mobile communication-based sidelink technology is applied through NTN, wider coverage and mobility may be provided to users through a more efficient wireless communication method than current Bluetooth/WiFi-based wearable equipment. Additionally, it may be differentiated from the existing communication standards in applications (e.g., wearable multimedia services) that require a high data transmission rate and mobility support using wearable equipment.

As another example, through NTN, it is possible to improve public safety communication networks and to expand disaster communication coverage. For example, through NTN, high-reliability, low-latency technology of 5G mobile communication system may provide public services such as disaster response. For example, it is possible to support mobile broadband services even in deserts or high mountains using a mobile base station such as a drone that supports 5G mobile communication. That is, in the case of applying NTN to public services, it is possible to expand disaster communication coverage by covering various areas.

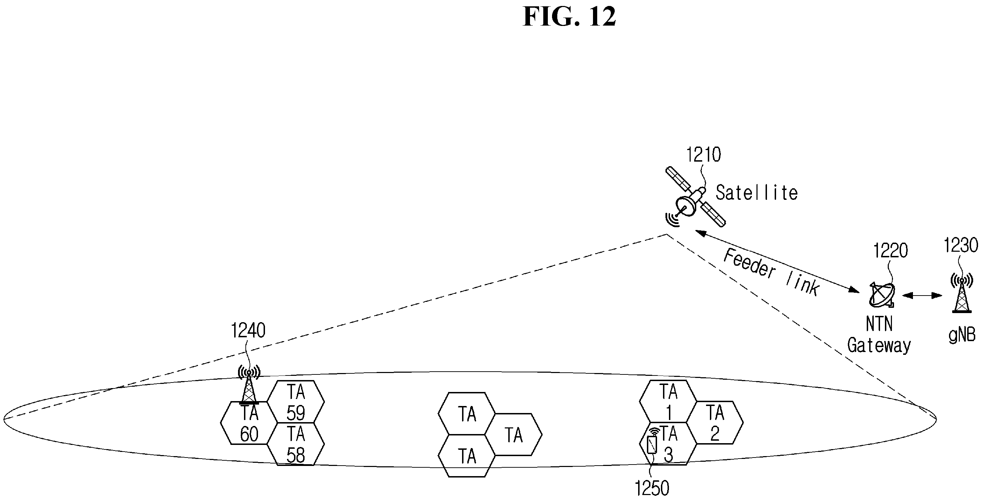

FIG. 12 illustrates a method of covering, by a satellite, a plurality of tracking areas (TAs) to which the present disclosure may apply. A UE may be registered to a network through a registration procedure. The UE registered to the network (e.g., 5GMM-REGISTERED) may transmit a registration request message to an access and mobility management function (AMF) for periodic registration update according to mobility.

In detail, when a tracking area identifier (TAI) of the UE is currently absent within a tracking area list received from the AMF previously registered (i.e., when the UE moves to a tracking area code (TAC) that is absent within a registration area previously registered), the UE may transmit the registration request message to the AMF for mobility registration update. Here, the TAI may represent an identifier that includes public land mobile network (PLMN) (MCC + MNC) and TAC. As another example, when the UE receives a configuration update command, the UE may transmit the registration request message to the AMF for mobility registration update. As another example, when the UE requests new local area data network (LADN) information, the UE may transmit the registration request message to the AMF for mobility registration update. Here, a local area data network (LADN) may represent a corresponding area when a specific service is provided only in a specific area. For example, the UE may perform data network connection through a protocol data unit (PDU) session only in a specific TA that represents geographical information of the corresponding area.

As another example, when a periodic registration update procedure occurs due to expiry of a timer (e.g., T3512) in the UE in an RRC idle state, the UE may transmit the registration request message to the AMF for mobility registration update. That is, the UE may perform mobility registration update based on various conditions, and may not be limited to the aforementioned case.

Referring to FIG. 12, a case in which the UE performs communication based on NTN may be considered. As described above, an NTN satellite 1210 may be connected to a base station (gNB) 1230 through an NTN gateway 1220. For example, the NTN satellite 1210 may service a wider coverage area than TN. Therefore, the NTN satellite 1210 may cover a plurality of TAs. As a detailed example, based on NTN communication, an NTN cell (e.g., satellite NG-RAN) may have a TAC corresponding to an area (e.g., TA 1, TA 2, TA 3, TA, ..., TA 58, TA 59, TA 60) serviced by a satellite. Here, the NTN cell may broadcast a plurality of TACs for an area serviced by the NTN cell through system information. When the UE receives information on the plurality of TACs through the system information, a single TAI may be selected in a non-access stratum (NAS) layer of the UE. Here, the TAI may include a PLMN and a TAC.

When the UE camps on the NTN cell, the UE may receive the plurality of TACs from a lower layer. The UE may configure a plurality of TAIs through the plurality of TAC and current PLMN. The UE may select a single TAI from among the configured plurality of TAIs. In detail, when only a single TAI is included in a current registration area of the UE, the UE may select the TAI. On the other hand, when the plurality of TAIs is included in the current registration area of the UE, the UE may select a TAI based on tracking area information included in serviced area information. Here, the tracking area information may include allowed tracking area information and non-allowed tracking area information. The UE may select a TAI that includes an allowed tracking area and does not include a non-allowed tracking area. For example, when the plurality of TAIs is included in the allowed tracking area and not included in the non-allowed tracking area, the UE may select a single TAI according to a preconfigured method (e.g., LADN service area information). That is, the UE may select a single TAI from among the plurality of TAIs configured in the UE based on a certain condition.

On the other hand, when all TAIs are not included in the current registration area of the UE, the UE may select a TAI that is not included in a network access forbidden TAI list (e.g., 5GS forbidden tracking areas for roaming, 5GS forbidden tracking areas for provision of service). Also, for example, when the plurality of TAIs is present, the UE may select a single TAI from among the plurality of TAIs based on a certain condition. The UE may consider the selected TAI as a current TAI.

Here, a case in which a lower layer of the UE transmits the plurality of TACs to the NAS layer may be considered.

Here, the UE may perform a TAI selection operation based on at least one of a case in which tracking area information (e.g., allowed tracking area, non-allowed tracking area) changes and a case in which network forbidden information (e.g., 5GS forbidden tracking areas for roaming, 5GS forbidden tracking areas for provision of service) changes.

In the following, a method of measuring, by a UE, a neighboring cell for cell reselection in an NTN system is described.

For example, the frequency band for NTN communication may be defined as bands, FR1 (450 MHz to 6 GHz), FR2 (24.25 GHz to 52.6 GHz), FR2x (52.6 GHz to 71GHz), FR3 (7.125 GHz to 24.25GHz), and FR4 (52.6 GHz to 114.25GHz) in a wireless communication system (e.g., 3GPP NR). Here, at least one of uplink, downlink, bandwidth, and duplex mode may be indicated through a plurality of operating bands within the corresponding band. For example, in the NTN system, S-Band areas of 1980 to 2010 MHz and 2170 to 2200 MHz may be used. The corresponding band may overlap the band of the existing wireless communication system (e.g., 3GPP NR).

As a detailed example, in FR1, if bands 1 and 65 of the wireless communication system (e.g., 3GPP NR) use adjacent or the same frequency domain as the NTN band, cross-border issues may arise.

Referring to Table 5, the NTN operating band may overlap the TN frequency band. For example, the NTN band may fully overlap the TN band that operates as FDD in band 65 (uplink operating band 1920 to 2010 MHz, downlink operating band 2110 to 2200 MHz). Also, the NTN operating band may partially overlap the TN band that operates as frequency division duplexing (FDD) in band 24 (uplink operating band 1626.5 to 1660.5 MHz, downlink operating band 1525 to 1559 MHz). Therefore, operators may need to coordinate the frequency band use of TN and NTN at the same geographical location.

[Table 5]

| NTN satellite operating band | Uplink (UL) operating band SAN receive / UE transmit FUL, low - FUL, high | Downlink (DL) operating band SAN transmit / UE receive FDL, low - FDL, high | Duplex mode |
|---|---|---|---|
| n256 | 1980MHz -2010 MHz | 2170 MHz - 2200 MHz | FDD |
| n255 | 1626.5 MHz -1660.5 MHz | 1525 MHz - 1559 MHz | FDD |
| NOTE1:NTN bands are numbered in descending order from n256. | | | |

Also, for example, to perform neighboring cell measurement for cell reselection the UE may consider information as follows.

## Public land mobile network (PLMN) selection

The UE may verify an available RF band according to its capability to search for an available PLMN and closed access group (CAG) within the NR band. The UE may search for a cell with the strongest signal strength and may verify system information to determine which PLMNs are included in each carrier and which CAGs are involved.

## Cell re-selection and measurement information

For example, system information block 2 (SIB2) may include public information on intra/inter-frequency) and inter-RAT for cell reselection of the UE. Such intra/inter-frequency and inter-RAT information for cell reselection may include at least one of parameters regarding the number of SSBs used to measure the average of signal strength as signal strength (nrofSS-BlocksToaverage), threshold of SSB signal strength (absThreshSS-BlocksConsolidation), range of cell-ranking criterion R for final cell reselection (rangeToBestCell), scaling factor (Q-Hyst), and mobility state parameters for estimating movement/speed state of the UE (MobilityStateParameters). Also, SIB2 may include at least one of general information for inter-frequency and inter-RAT reselection (cellReselectionServingFreqInfo), signal strength threshold for measurement trigger (s-NonIntraSearchP), signal quality threshold (s-NonIntraSearchQ), signal strength threshold for cell reselection to inter-frequency, inter-RAT of the same or lower priority (threshServingLowP), signal quality threshold (threshServingLowQ), and priority (cellReselectionPriority, cellReselectionSubPriority). Also, SIB2 may include at least one of information for intra-frequency cell reselection (intraFreqCellReselectionInfo), minimum signal strength for signal strength calculation of an adjacent intra-frequency cell in a cell selection criterion (S-Criterion) procedure (q-RxLevMin, q-RxLevMinSUL), minimum signal quality (q-QualMin), signal strength threshold for measurement trigger (s-IntraSearchP), signal quality threshold (s-IntraSearchQ), time for reselection (t-ReselectionNR), a band list for applying cell reselection parameters (frequencyBandList), SSB based measurement timing configuration (SMTC) and SSB to be measured within SMTC duration (ssb-ToMeasure).

### Inter-frequency measurement procedure

For example, SIB4 includes information of neighboring cells associated with inter-frequency cell reselection. The aforementioned information relates to a cell reselection parameter for a single frequency and may be applied only within a specific cell as cell-specific information. Also, for example, SIB4 includes an inter-frequency information list (interFreq-CarrierFreqList) and may include information on up to eight frequencies.

In each piece of frequency information, a downlink carrier frequency may be indicated with an absoluste radio frequency channel number (ARFCN) (dl-CarrierFreq) value. In the case of including a plurality of bands, SIB4 may include a band list (frequencyBandList), parameters regarding the number of SSBs used to measure the average of signal strength as signal strength (nrofSS-BlocksToaverage), threshold of SSB signal strength (absThreshSS-BlocksConsolidation), SMTC, SSB subcarrier spacing (ssbSubcarrierSpacing), an SSB to be measured within an SMTC duration (ssb-ToMeasure), indication regarding whether to derive an SSB index of a neighboring cell from a serving cell (deriveSSB-IndexFromCell), information indicating a specific slot and symbol for measuring signal strength of an SSB within SMTC window (ss-RSSI-Measurement), minimum signal strength for signal strength calculation of an adjacent inter-frequency cell in a cell selection criterion (S-Criterion) procedure (q-RxLevMin, q-RxLevMinSUL), minimum signal quality (q-QualMin), time for reselection (t-ReselectionNR), signal strength threshold for cell reselection to inter-frequency according to priority (threshX-HighP, threshX-LowP), signal quality threshold (threshX-HighQ, threshX-LowQ), priority (cellReselectionPriority, cellReselectionSubPriority), signal strength offset according to frequency used in a cell R-criterion ranking procedure (q-OffsetFreq), a neighboring cell information list (InterFreqNeighCellList), and an excluded neighboring cell information list (interFreqExcludedCellList). Here, the neighboring cell information list may include at least one of at least one PCI (physCellId), signal strength offset used in a cell R-criterion ranking procedure (q-OffsetCell), minimum signal strength for signal strength calculation in a cell selection S-Criterion procedure (q-RxLevMinOffsetCell), and minimum signal quality (q-QualMinOffsetCell) information. Also, in the neighboring cell information list, an allowed cell list (intraFreqAllowedCellList) and an excluded cell list (IntraFreqExcludedCellList) may be specified as PCI range. Here, the PCI range may be indicated by a starting PCI and range (4, 8, 12, 16, ..., 1008).

### Intra-frequency measurement procedure

SIB3 includes information of neighboring cells associated with intra-frequency cell reselection. A neighboring cell information list (IntraFreqNeighCellList) may include at least one of at least one PCI (physCellId), signal strength offset used in a cell R-criterion ranking procedure (q-OffsetCell), minimum signal quality for signal strength calculation in a cell selection S-Criterion procedure (q-RxLevMinOffsetCell), and minimum signal quality (q-QualMinOffsetCell) information. Also, in the neighboring cell information list, an allowed cell list (intraFreqAllowedCellList) and an excluded cell list (IntraFreqExcludedCellList) may be indicated as PCI range. Here, the PCI range may be indicated by a starting PCI and range (4, 8, 12, 16, ..., 1008).

### Measurement rules for cell re-selection

In the existing wireless communication system (e.g., NR), if the signal strength of a serving cell is greater than or equal to a threshold, an RRC idle/inactive UE may not perform inter-frequency measurement. On the contrary, if the signal strength of the serving cell is less than the threshold, the RRC idle/inactive UE may perform inter-frequency measurement at all times. Also, for example, the UE may measure an inter-frequency with higher priority than a current NR frequency at all times. On the other hand, in the case of having a priority equal to or less than the current NR frequency, the UE may not perform inter-frequency measurement if the signal strength of the serving cell is greater than or equal to a specific threshold and may perform inter-frequency measurement if the signal strength of the serving cell is less than the threshold.

### SMTC (SSB based measurement timing configuration)

For example, in the existing wireless communication system (e.g., LTE), by periodically transmitting a cell-specific reference signal (CRS), the UE may be able to measure signal strength of a serving/adjacent cell. However, in the current wireless communication system (e.g., NR), the Always-on-Signal (e.g., CRS) concept may not be applied to reduce overhead and interference from an adjacent cell. Therefore, in the current wireless communication system, the UE needs to measure the signal strength (RSRP, RSRQ) of the serving cell and the adjacent cell to hand over to a cell with stronger signal strength or to add a new carrier. Therefore, in the current wireless communication system (e.g., NR), the UE may measure the signal strength through a synchronization signal (SS)/PBCH block (SSB) that includes an SS and a physical broadcast channel (PBCH) used for downlink synchronization.

In detail, the number of SSBs may differ depending on the frequency operating band. For example, in FR1 of 3 GHz or less, four SSBs may be configured within a single burst. Also, in FR1 of 3 to 6 GHz, eight SSBs may be configured within a single burst. Also, in the band of 6 GHz or more, 64 SSBs may be configured within a single burst. An SSB burst set may be periodically transmitted from a cell at the periodicity of 5, 10, 20, 40, 80, or 160 ms, but there is no need to measure signal strength every SSB period to reduce power consumption of the UE. For example, the SMTC window may be applied such that the UE may perform SSB measurement and may verify the signal strength. That is, the UE may reduce the power consumption of the UE by periodically measuring the signal strength of an SSB for each SMTC window.

Here, the network may configure the SMTC window in the UE through an RRC message. In detail, the network may transmit ssbFrequency (NR-ARFCN), SSB SCS (ssbSubcarrierSpacing), and SMTC information within MeasObjectNR through the RRC message. The network may configure a duration indicating periodicity and offset information (periodicityAndOffset) and window size in time units within the SMTC through the RRC message. As another example, the network may provide specific frequency information (ARFCN) and SMTC information together to the UE within system information. The UE may determine which band is to be verified at which point in time through frequency information (ARFCN) and time information (SMTC).

For example, in an NTN environment with great propagation delay, since it is not possible to include all of a plurality of cells within the SMTC window, it may be possible to configure a plurality of SMTCs. Also, the UE may perform signal strength measurement for the serving cell and the adjacent cell even in an RRC connected/inactive/idle environment. In the following, a method of measuring, by the UE, a neighboring cell for cell reselection is described based on the above.

In NTN-TN and NTN-NTN, technology for providing service continuity in consideration of mobility may be required. For example, a method of performing measurement based on mobility between NTN and TN and between NTN and NTN and providing service continuity may be required.

In more detail, a method of reducing power consumption of the RRC idle/inactive UE is described below. For example, the UE may operate based on one of an RRC connected state, an RRC idle state and an RRC inactive state. Here, if RRC of the UE is logically connected to RRC of a core network, it may be an RRC connected state. On the contrary, if the RRC of the UE is not connected to the RRC of the core network, it may be an RRC idle state. However, a lot of signaling may inevitably occur to enter the RRC connected state from the RRC idle state. Considering the above, an RRC inactive state may be present. In the case of the RRC inactive state, the UE may be regarded to be in a connected state from the core network perspective. That is, the core network may maintain both the user plane and the control plane of the UE in the active state. Therefore, in the RRC inactive state, paging may be initiated by RAN.

In the following, a method of reducing power consumption of the UE is described. In particular, the UE in the RRC idle/inactive state is not in a state of transmitting data and thus, needs to minimize its power consumption. Here, in the existing wireless communication system (e.g., Rel-17), the UE may preferentially select/camp on a TN cell in the relationship between NTN and TN cells. Therefore, the UE needs to seamlessly measure the signal strength of surrounding TN cells, which may result in constant power consumption. In the following, a method of performing a conditional cell search in consideration of the above is described.

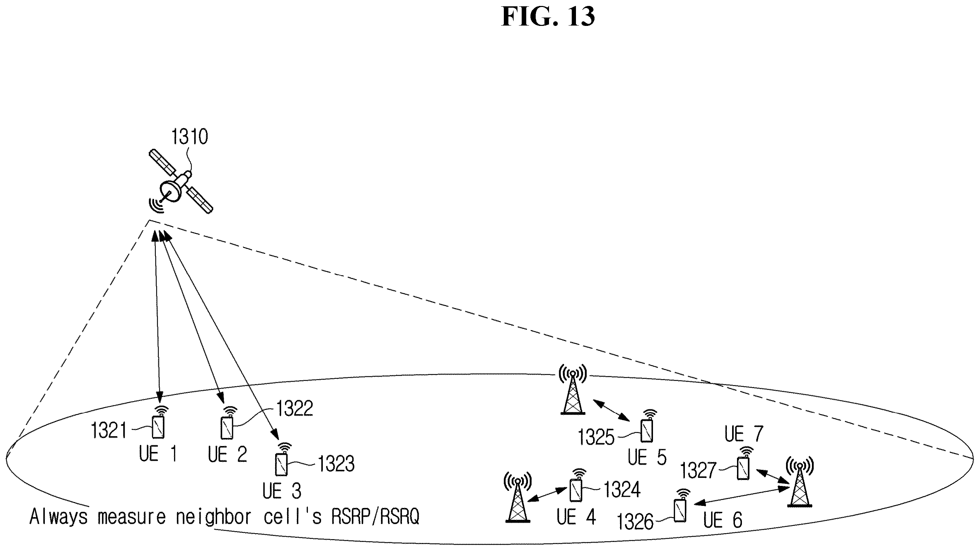

FIG. 13 illustrates a method of measuring a TN cell in an NTN environment applicable to the present disclosure. Referring to FIG. 13, NTN cell coverage may be determined based on an NTN satellite 1310. Here, TN cells may be present within the NTN cell coverage. In detail, for a UE 1 1321, a UE 2 1322, and a UE 3 1323, a TN cell with sufficient signal strength may be absent. Therefore, the UE 1 1321, the UE 2 1322, and the UE 3 1323 are camping on an NTN cell and may perform a cell search for a TN frequency domain at all times to camp on a TN cell. On the other hand, for a UE 4 1324, a UE 5 1325, a UE 6 1326, and a UE 7 1327 as UEs within the NTN cell coverage, a TN cell with sufficient signal strength may be present. Therefore, the UE 4 1324, the UE 5 1325, the UE 6 1326, and the UE 7 1327 may camp on the TN cell. Here, the UE 1 1321, the UE 2 1322, and the UE 3 1323 camping on the NTN cell are camping on the NTN cell, but searches for the TN cell by performing measurement for the TN cell, which may lead to increasing power consumption. Therefore, there is a need for a method of reducing the power consumption.

Also, even the UE 4 1324, the UE 5 1325, the UE 6 1326, and the UE 7 1327 camping on the TN cell constantly perform measurement for the NTN cell, which may lead to power consumption. Therefore, there is a need for a method of reducing the power consumption.

In the following, each of a method of performing a conditional NTN cell search (frequency measurement) (method 1) and a method of performing a conditional TN cell search (frequency measurement) (method 2) is described based on the above. Here, method 1 and method 2 may not be mutually exclusive since they are contradictory. Although each method is separately described for clarity of description, it may be apparent that each method is applicable depending on a situation of the UE.

## Method 1 (conditional NTN cell search (frequency measurement))

The UE may perform measurement for cell reselection of inter-frequencies and inter-RAT frequency indicated through system information. Here, conditions of performing measurement for cell reselection of inter-frequencies and inter-RAT frequency may be as shown in Table 6 below. That is, the UE may determine whether to perform measurement depending on whether the priority of inter-frequency or inter-RAT frequency is higher than that of current frequency and whether the signal strength and the signal quality of a serving cell are greater than a threshold. In particular, a case in which the priority of inter-frequency or inter-RAT frequency is lower than that of current frequency, but the signal strength and the signal quality of the serving cell are greater than the threshold may be considered. Here, if a distance between the UE and a reference location is less than a distance threshold set based on system information, the UE may not perform measurement for the inter-frequency or the inter-RAT frequency. If a distance between the UE and a reference location is greater than the distance threshold, the UE may perform measurement for the inter-frequency or the inter-RAT frequency. On the other hand, if there is no distance threshold set based on the system information, the UE may not perform measurement for the inter-frequency or the inter-RAT frequency at all times.

Also, in a case in which the priority of inter-frequency or inter-RAT frequency is lower than that of current frequency, but the signal strength and the signal quality of the serving cell are less than the threshold, the UE may perform measurement for the inter-frequency or the inter-RAT frequency.

Also, for example, when t-service of the serving cell is present in system information (e.g., SIB 19), the UE may perform intra/inter-frequency and inter-RAT frequency measurement before t-service regardless of conditions shown in Table 6 below. Here, t-service may refer to an epoch time during which a fixed cell provides coverage. As another example, the UE may perform measurement for high priority intra/inter-frequency and inter-RAT frequency(ies) regardless of conditions shown in Table 6.

[Table 6]

| |
|---|
| If priority of NR inter-frequency or inter-RAT frequency is higher than that of current NR frequency: |
| UE performs NR inter-frequency or inter-RAT frequency measurement at all times. |
| If priority of NR inter-frequency or inter-RAT frequency is equal to or lower than that of current NR frequency: |
| If signal strength (Srxlev) and signal quality (Squal) of a serving cell are greater than signal strength threshold (s-NonIntraSearchP) and signal quality threshold (s-NonIntraSearchQ) within SIB2: |
| If a UE-reference location distance is less than distance threshold within SIB 19 provided from the serving cell, UE may not perform NR inter-frequency or inter-RAT frequency measurement (for NTN-NTN mobility). |
| If a UE-reference location distance is greater than distance threshold within SIB 19 provided from the serving cell, UE performs NR inter-frequency or inter-RAT frequency measurement at all times (for NTN-NTN mobility). |
| If there is no distance threshold within SIB 19 provided from the serving cell, UE may not perform NR inter-frequency or inter-RAT frequency measurement (for legacy NR mobility). |
| If signal strength (Srxlev) and signal quality (Squal) of the serving cell are less than signal strength threshold (s-NonIntraSearchP) and signal quality threshold (s-NonIntraSearchQ) within SIB2: |
| The UE performs NR inter-frequency or inter-RAT frequency measurement at all times (for legacy NR mobility). |

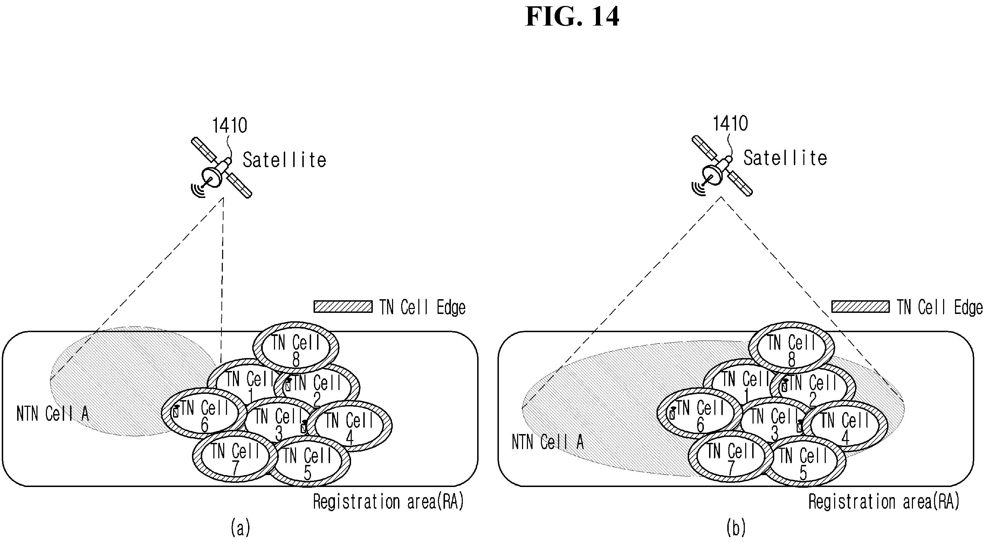

FIG. 14 illustrates an overlapping environment of a TN cell and an NTN cell applicable to the present disclosure. Referring to FIG. 14, NTN cell A based on a satellite 1410 may overlap TN cells. Here, coverage of NTN cell A shown in (b) of FIG. 14 may be wider than coverage of NTN cell A shown in (a) of FIG. 14. However, it is only an example for clarity of description. A plurality of cells may be present in an area serviced by the satellite and is not limited to a specific embodiment.

For example, the coverage of NTN cells shown in (a) and (b) of FIG. 14 may be an urban area in which TN cells are densely present and a suburban/mountainous area in which TN cells are rare or absent. As another example, (a) and (b) of FIG. 14 may be a land area in which TN cells are densely present and a marine area in which TN cells are rare or absent, but may not be limited to a specific embodiment. Here, a registration area (RA) may be an area that the network may configure in consideration of mobility and services of a UE. The RA may be configured in the UE through a plurality of TACs. Therefore, the UE may move and camp on a TN or NTN cell without a registration update procedure within the RA.

Here, for example, in (a) and (b) of FIG. 14, the UE may be camping on a TN cell and may be present on the edge of coverage (TN cell edge) in which the signal strength or signal quality of the TN cell, the serving cell, is less than a specific value. Here, the UE may perform an NTN cell measurement and search procedure. However, in a situation in which many adjacent TN cells are present around the UE, the UE needs to camp on a TN cell rather than an NTN cell. Therefore, the NTN cell measurement and search procedure in the UE may be unnecessary.

As a more detailed example, in (a) and (b) of FIG. 14, a UE present on the cell edge within TN cells 2 and 3 needs to prioritize camping on an adjacent TN cell. Therefore, NTN cell measurement and search may be an unnecessary procedure for the UE present on the cell edge. Also, for example, as shown in (a) of FIG. 14, even in an area in which service coverage of the NTN cell A is absent, the UE may not need to perform the NTN cell measurement and search procedure. Also, as shown in (b) of FIG. 14, although the service coverage of the NTN cell A covers an area in which TN cells are densely present, the UE needs to camp on a TN cell with high priority and thus, NTN cell measurement and search may be unnecessary. On the other hand, since there is no adjacent TN cell, a UE camping on TN cell 6 may require the NTN cell measurement and search, and cell search conditions considering the above may be required.

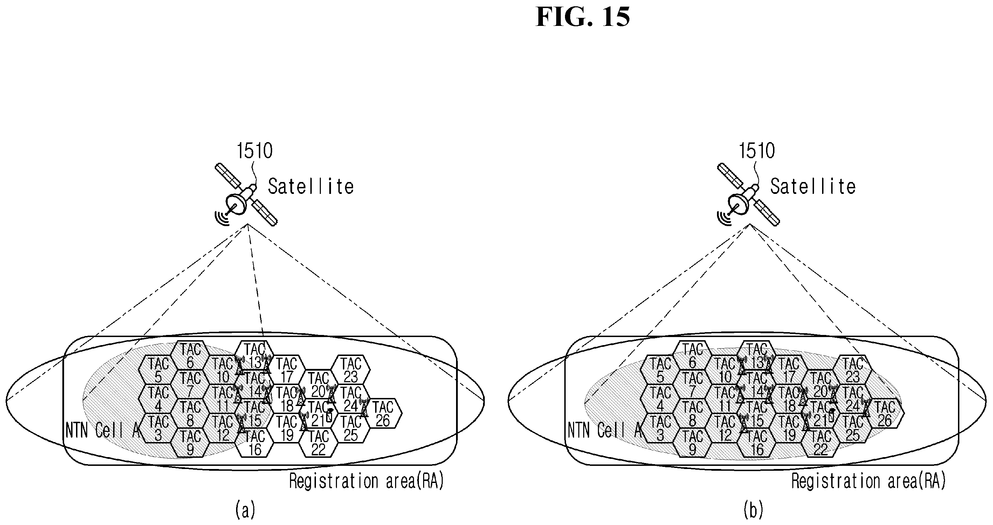

FIG. 15 illustrates an environment in which a TN cell and an NTN cell overlap applicable to the present disclosure. Referring to FIG. 15, NTN cells and TN cells may overlap based on a satellite 1510.

Here, when the UE camps on a TN cell, TN frequency may be configured to have high priority and NTN frequency may be configured to have low priority. That is, since the TN cell provides high quality of service (QoS), the UE may be configured to prioritize camping on the TN cell. Here, if the signal strength (Srxlev) and signal quality (Squal)of the TN cell, serving cell, are less than signal strength threshold (s-IntraSearchP) and signal quality threshold, the UE may measure low priority inter-frequency or inter-RAT frequency at all times, which may be as shown in Table 6.

For example, if the UE is present on the cell edge, the signal strength and the signal quality of the serving cell may be less than the signal strength threshold and the signal quality threshold. In the above situation, when the signal strength and the signal quality of the serving cell of the UE camping on the TN cell are weakened, the UE may essentially be able to perform low priority NTN cell measurement. Referring to FIG. 15, NTN cell A may service a wider area in (b) of FIG. 15 than in (a) of FIG. 15. However, it is only an example for clarity of description and a plurality of cells may be present in an area in which the satellite may provide a service. For example, in (a) and (b) of FIG. 15, TACs in an area in which TN cells are dense or present may be TAC 10 to TAC 26. For example, (a) and (b) of FIG. 15 may be an urban area in which TN cells are densely present and a suburban/mountainous area in which TN cells are rare or absent. As another example, (a) and (b) of FIG. 15 may be a land area in which TN cells are densely present and a marine area in which TN cells are rare or absent, but may not be limited to a specific embodiment. Here, the UE may perform an initial access through a TN cell and may receive configuration of a registration area (RA) from an AMF. The RA is an area that the network may configure in consideration of mobility and services of the UE and may be configured in the UE through a plurality of TACs. Therefore, the UE may move and camp on a TN cell or an NTN cell without a registration update procedure within the RA.

Here, for example, referring to (a) and (b) of FIG. 15, a case in which the UE is camping on a TN cell with TAC 21 and the signal strength or the signal quality of the TN cell, serving cell, are less than a specific value may be considered. In the above situation, the UE may perform an NTN cell measurement and search procedure. However, in a situation in which many adjacent TN cells are present around the UE, it may be unnecessary for the UE to perform the NTN cell measurement and search procedure. Also, for example, as shown in (a) of FIG. 15, even in an area without service coverage of NTN cell A, it may be unnecessary to perform the NTN cell measurement and search procedure. Also, as shown in (b) of FIG. 15, although the service coverage of NTN cell A covers an area in which TN cells are densely present, the UE needs to camp on a high-priority TN cell, so NTN cell measurement and search may be unnecessary.

That is, as described above, if the UE not requiring NTN frequency measurement performs the NTN frequency measurement, the UE may continuously consume power and thus, a method for reducing this may be required. To this end, based on information (e.g., TAC/cell/RAC) capable of estimating a location or a specific location of the UE, the UE camping on a TN cell may conditionally perform NTN cell measurement and search.

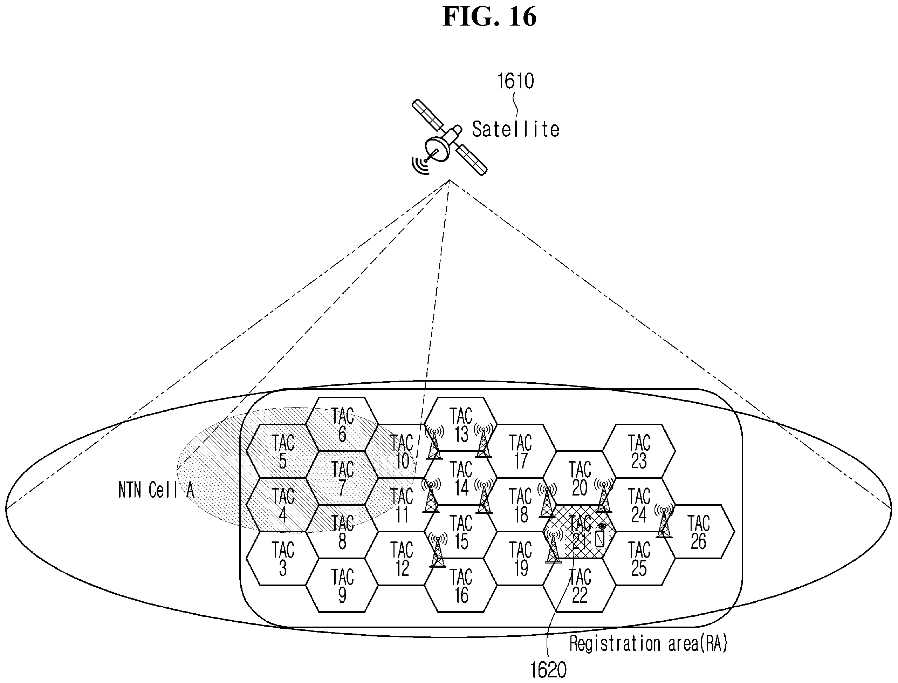

In detail, FIG. 16 illustrates a method of performing tracking area code (TAC) list-based measurement applicable to the present disclosure. Referring to FIG. 16, coverage of NTN cell A may be determined based on a satellite 1610. Here, a UE 1620 in an RRC idle state may perform an initial access and then may be assigned a registration area (RA) from an AMF. The RA refers to an area in which the UE 1620 may move without performing registration update, and may include a plurality of TACs. As a detailed example, when the UE 1620 is assigned the RA having TACs A, B, and C, the UE 1620 in the RRC idle state may move to a cell having TACs A, B, and C without performing a registration update procedure from the AMF. On the other hand, if the UE 1620 moves to a cell having TAC D, the UE 1620 may perform the registration update procedure to the AMF and then may be assigned a new RA.

Here, referring to FIG. 16, when an NTN cell and a TN cell overlap, a TAC may be configured based on the NTN cell and the TN cell. The TAC may refer to a geographically fixed location. Cells of each base station may have a specific TAC identifier. As a detailed example, the UE 1620 may be assigned a RA including all TACs (TAC 3 to TAC 25) shown in FIG. 16 from the AMF. However, it is only an example of clarity of description and is not limited to the aforementioned embodiment. The UE 1620 may move within the RA without performing the registration update procedure to the AMF and may camp on a cell having a single TAC within the RA. For example, when the UE 1620 is present in a TAC 21 area, the UE 1620 may camp on a TN cell with TAC 21. Here, when the UE moves to TAC 7, the UE may perform camping on an NTN cell since there is no TN cell with sufficiently strong signal strength. Here, NTN cell A may service a wider area than the TN cell. Therefore, the NTN cell may transmit a plurality of TACs to the UE 1620 through system information. The UE may derive a TAI by selecting a single TAC belonging to the RA from among the plurality of TACs acquired through the system information.

Here, the UE in the RRC idle state may receive configuration of cell reselection parameters for camping through an RRC message (e.g., RRC Release, SIB2, 3, 4). That is, when the UE 1620 shifts to an RRC idle state and then receives configuration of cell reselection parameters for an NTN cell at a TAC 21 location, the UE may continuously search for an NTN cell within the RA. Since the NTN cell is present within the RA, the network may configure cell reselection parameters for the NTN cell with the RRC message. However, since the UE 1620 is incapable of camping on the NTN cell in an area other than TAC 4 to TAC 11 serviced by NTN cell A, performing a cell search may increase unnecessary power consumption.

Also, since the TN cell supports higher QoS than the NTN cell, camping on the NTN cell through cell reselection may be an unnecessary procedure for the UE 1620 camping on the TN cell. On the other hand, in an area in which signal strength of a serving cell is insufficient and an SSB of the NTN cell is receivable, the UE 1620 camping on the TN cell may require an NTN cell search. In detail, if the signal strength is insufficient on the cell edge, the UE 1610 camping on a TN cell with TAC 10 may need to perform a cell search for NTN cell A. Considering the above situation, the UE 1610 may reduce power consumption through a procedure of searching for an NTN cell in a specific TAC.

Here, referring to FIG. 16, the network may include, in a TAC list, TAC 4 to TAC 10 serviced by NTN cell A for the NTN cell search and a TAC capable of detecting an SSB of NTN cell A. Here, the network may set cell reselection parameters and may configure the same in the UE 1620 through the RRC message. For example, the UE 1620 present in TAC 21 may receive configuration of NTN cell reselection parameters and the TAC list through the RRC message (e.g., system information, RRC Release) in the TN cell. The UE 1620 may recognize that TAC 21 is a TAC not present in the TAC list. Therefore, the UE 1620 may perform only a TN cell search without performing an NTN cell search. Also, in the case of moving to TAC 22 according to UE mobility, the UE 1620 may be camping on a TN cell having TAC 22 since the UE 1620 performs only a search for a TN cell. On the other hand, in the case of moving to a TAC area (e.g., TAC 10) indicated by the TAC list according to UE mobility and camping on the TN cell having TAC 10, the UE 1620 may perform the NTN cell search based on the configured NTN cell reselection parameters. Also, although the UE 1620 moves to the TAC area indicated by the TAC list, the UE 1620 needs to prioritize the TN cell since the TN cell supports higher QoS. Therefore, the UE 1620 camping on the TN cell needs to perform the NTN cell search in consideration of a procedure of verifying the signal strength of the serving cell as well as the TAC list.

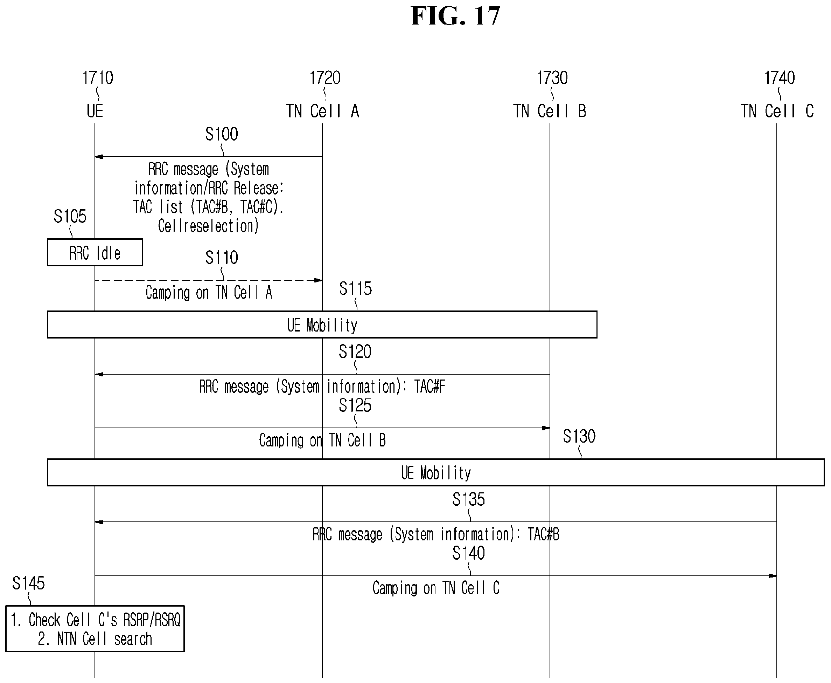

FIG. 17 illustrates a TAC list-based NTN cell measurement signaling procedure applicable to the present disclosure. Referring to FIG. 17, a UE 1710 may receive an RRC message in an RRC connected/inactive/idle state from TN cell A 1720 (S100). Here, the UE 1710 may acquire and configure parameters (e.g., Cellreselection) including a specific condition (TAC list) and frequency information for cell reselection within the RRC message, SMTC, and other information. Then, the UE 1710 may shift to an RRC idle state (S105). For example, if an amount of time elapses or an RRC release message is received, the UE 1710 may shift to the RRC idle state. Here, the UE 1710 in the RRC idle state is camping on TN cell A 1720 (S110) and may perform frequency measurement based on configured parameters. In detail, the UE 1710 may perform frequency measurement for intra/inter-frequency according to the parameters (e.g., Cellreselection) including frequency information, the SMTC, and other information. Then, the UE 1710 may require cell reselection with a new cell based on UE mobility (S115). For example, the UE 1710 may select TN cell B 1730 through a cell reselection procedure. The UE 1710 may receive an RRC message (e.g., system information) of TN cell B 1730 and may receive parameters having TAC#F associated with TN cell B 1730 (S120). Here, TAC#F may not be included in a TAC list. Therefore, the UE 1710 camping on TN cell B 1730 may not perform an NTN cell measurement and search (S125). The UE 1710 may reselect a new cell based on UE mobility (S130). The UE 1710 may select TN cell C 1740 through the cell reselection procedure. Then, the UE 1710 may receive an RRC message (e.g., system information) of TN cell C 1740 and may receive parameters having TAC#B associated with TN cell C. For example, TAC#B may be included in the TAC list. Therefore, the UE 1710 camping on TN cell C 1740 (S140) may perform the NTN cell measurement and search. That is, the UE 1710 may verify the signal strength and the signal quality of TN cell C 1740 that is a serving cell, and, if they are less than a specific value, may perform the NTN cell measurement and search (S145).

As another example, the UE 1710 may perform the NTN cell measurement and search based on the TAC list without a procedure of verifying the signal strength and the signal quality of TN cell C 1740 that is the serving cell.

Here, at least one TAC expressed as 24-bit string may be configured in the TAC list. For example, although TAC#B and TAC#C each including 24-bit string may be included in the TAC list in FIG. 17, it is only an example and may not be limited to the aforementioned embodiment.

Also, a TAC may be differently configured depending on PLMN (MCC + MNC). As another example, a UE in an RRC idle/inactive state may have a plurality of PLMNs on which the UE may camp. Here, a RA may be configured with a plurality of TACs for each PLMN. Therefore, the network may configure a TAC list for each PLMN or may configure a TAI in the UE. Here, since the TAI includes PLMN and TAC, a plurality of TAIs may be configured based on the TAC list. Also, the TAC list is only an example and may not be limited to the aforementioned name.

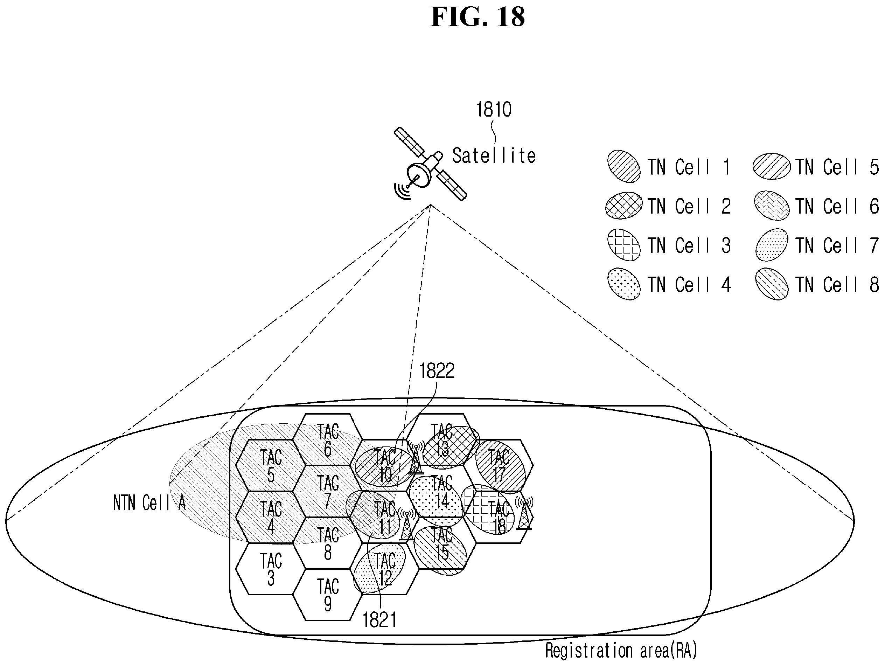

FIG. 18 illustrates a method of performing a cell list-based measurement procedure applicable to the present disclosure. Referring to FIG. 18, NTN cell A coverage may be determined based on a satellite 1810. Here, a UE in an RRC idle state may perform an initial access and then may be assigned a registration area (RA) as an area in which the UE may move, without performing registration update from an AMF. The RA may include a plurality of TACs. As a detailed example, if the UE is assigned the RA having TACs A, B, and C, the UE in the RRC idle state may move to a cell having TACs A, B, and C without performing a registration update procedure from the AMF. On the other hand, if a UE 1620 moves to a cell having TAC D, the UE 1820 may perform the registration update procedure to the AMF and then may be assigned a new RA.

Here, referring to FIG. 18, an NTN cell and a TN cell may overlap. Here, a TAC may refer to a geographically fixed location. Therefore, cells of each base station may have a specific TAC identifier. The UE may be assigned a RA including all TACs (TAC 3 to TAC 18) shown in FIG. 18 from the AMF, but it is only an example and is not limited to the aforementioned embodiment. That is, the UE may move within the RA without performing the registration update procedure and may camp on a cell having a single TAC within the RA. For example, in a state in which the UE is present in a TAC 18 area, the UE may camp on TN cell 3 having TAC 18. Also, when the UE moves to TAC 7, the UE may perform camping on an NTN cell since there is no TN cell with sufficiently strong signal strength. Here, since NTN cell A services a wider area than the TN cell, NTN cell A may transmit a plurality of TACs to the UE through system information. The UE may derive a TAI by selecting a single TAC belonging to the RA from among the plurality of TACs acquired through the system information. Here, for example, the UE in the RRC idle state may receive configuration of cell reselection parameters for camping through the RRC message (e.g., RRC Release, SIB2, 3, 4). That is, when the UE having shifted to the RRC idle state receives configuration of cell reselection parameters for an NTN cell from TN cell 3 at a TAC 18 location, the UE may continuously search for an NTN cell within the RA. Here, since the NTN cell is present within the RA, the network may configure cell reselection parameters for the NTN cell with the RRC message. However, since the UE is incapable of camping on the NTN cell in an area other than TACs 4, 5, 6, 7, 8, 10, and 11 serviced by NTN cell A, performing a cell search may increase unnecessary power consumption. Also, since the TN cell supports higher QoS than the NTN cell, camping on the NTN cell through cell reselection may be unnecessary for the UE camping on the TN cell. However, based on Table 6 above, in an area in which signal strength of a serving cell is insufficient and an SSB of the NTN cell is verifiable, the UE camping on the TN cell may require an NTN cell search. As a detailed example, when the signal strength is insufficient on the cell edge, the UE camping on TN cell 5 with TAC 10 may need to perform a cell search for NTN cell A. Therefore, through a procedure of searching, by the UE, for an NTN cell in a specific cell, it is possible to reduce power consumption of the RRC idle UE.

In more detail, the network may include, in a cell list, cell 5 1821 and cell 6 1822 capable of detecting an SSB of NTN cell A with a TAC serviced by NTN cell A for NTN cell search. The network may set NTN cell reselection parameters including the cell list and may configure the same in the UE through the RRC message. For example, the UE present in TAC 18 may receive configuration of NTN cell reselection parameters and the cell list (TN cells 5 and 6) through the RRC message (e.g., system information, RRC Release) in TN cell 3. When the UE is camping on TN cell 3 not included in the cell list in TAC 18, the UE may perform only the configured TN cell search without performing an NTN cell search. On the other hand, if the UE moves to TAC 15 according to UE mobility, the UE may be camping on TN cell 8 having TAC 15 since the UE is performing a search only for the TN cell. On the other hand, if the UE is camping on a TN cell (e.g., TN cell 5 1821 and TN cell 6 1822) indicated by the cell list according to the UE mobility, the UE may perform the NTN cell search based on the configured NTN cell reselection parameters. For example, although the UE is camping on a TN cell indicated by the cell list, the UE needs to prioritize the TN cell since the TN cell supports higher QoS. Therefore, the UE camping on the TN cell needs to perform the NTN cell search in consideration of a procedure of verifying the signal strength of a serving cell as well as the cell list.

FIG. 19 illustrates a cell list-based NTN cell measurement signaling procedure applicable to the present disclosure. Referring to FIG. 19, a UE 1910 may receive an RRC message in an RRC connected/inactive/idle state from TN cell A 1920 (S200). Here, the UE may acquire and configure parameters (e.g., Cellreselection) including a specific condition (cell list) and frequency information for cell reselection within the RRC message, SMTC, and other information. Then, the UE 1910 may shift an RRC idle state (S205). For example, if an amount of time elapses or an RRC release message is received, the UE 1910 may shift to the RRC idle state. Here, the UE 1910 in the RRC idle state is camping on TN cell A 1920 (S210) and may perform frequency measurement based on the configured parameters. In detail, the UE 1910 may perform frequency measurement for intra/inter-frequency according to the parameters (e.g., Cellreselection) including frequency information, SMTC, and other information. Then, the UE 1910 may require cell reselection with a new cell based on UE mobility (S215). For example, the UE 1910 may select TN cell B 1930 through a cell reselection procedure. The UE 1910 may receive an RRC message (e.g., system information) of TN cell B 1930 and may receive parameters having TAC#F associated with TN cell B 1930 and cell ID (cell B) (S220). Here, cell B may not be included in a cell list. Therefore, the UE 1910 camping on TN cell B 1930 may not perform an NTN cell measurement and search (S225). Then, the UE 1910 may reselect a new cell based on UE mobility (S230). The UE 1910 may select TN cell C 1940 through the cell reselection procedure. Then, the UE 1910 may receive an RRC message (e.g., system information) of TN cell C 1940 and may receive parameters having TAC#B associated with TN cell C and cell ID (cell C) (235). For example, cell C may be included in the cell list. Therefore, the UE 1910 camping on TN cell C 1940 (S240) may perform the NTN cell measurement and search. That is, the UE 1910 may verify the signal strength and the signal quality of TN cell C 1940 that is a serving cell and, if they are less than a specific value, may perform the NTN cell measurement and search (S245). As another example, the UE 1910 may perform the NTN cell measurement and search without a procedure of verifying the signal strength and the signal quality of TN cell C 1940 that is the serving cell.

Here, the cell ID may refer to a cell identity. Here, the cell ID may include a 36-bit string and may include a gNB ID and a cell identity. The gNB ID may include 22 bits or 32 bits. Therefore, the cell identity may be expressed as 14 bits or 4 bits. For example, when dividing the gNB ID using 22 bits, an operator may assign 4194305 IDs for macro cell or small cell. Here, a 14-bit cell identity may be assigned in consideration of 250 DUs and 12 cells per DU in a CU-DU structure.

Therefore, in FIG. 19, the cell list may include a 16-bit string including gNB ID and cell identity for cell C. Also, the cell ID may be differently configured based on PLMN (MCC + MNC). For example, a UE in an RRC idle/inactive state may have a plurality of PLMNs on which the UE may camp. Here, a RA may be configured with a plurality of TACs for each PLMN. The network may configure the cell list for each PLMN or may configure an NR cell global identifier (NCGI) in the UE. Here, since the NCGI includes PLMN and cell ID, the plurality of NCGIs may be configured based on the cell list. Also, for example, the cell list is only an example and may not be limited to the aforementioned name.

FIGS. 20 and 21 illustrate a method of performing measurement based on a RAN area code (RAC) applicable to the present disclosure.

Referring to FIG. 20, a cell ID (or cell identity) refers to a parameter for identifying a cell and a single independent value may be assigned to each cell within a PLMN. A UE may verify PLMN information and a tracking area code (TAC), a RAN area code (RAC), and a cell ID associated with the information from a PLMN identity information list (PLMN-IdentityInfoList) within system information (e.g., SIB1). Here, the TAC and the cell ID are the same as described above. Also, the RAC may refer to a parameter that divides a specific RAN area into up to 255 within a single TAC. That is, a TN cell may transmit a TAC in which the TN cell is present and RAC information associated with the TAC to the UE. The UE may determine whether to perform mobility update to the network based on the received information. For example, the mobility update may be the aforementioned registration update. As another example, the mobility update may be a RAN-based notification area update (RNAU) procedure performed by the UE in an RRC inactive state. For example, when the UE in the RRC inactive state leaves the RAN-notification area (RNA) cell list, the UE in the RRC inactive state needs to receive configuration of a new RNA cell list and, to this end, may perform the RNAU procedure. That is, the UE in the RRC inactive state may perform the RNAU procedure based on UE mobility.

For example, referring to FIG. 20, a RAC may be configured within a TAC. That is, a plurality of RACs may be configured within each TAC. Also, a TN cell may have its own at least one TAC and RAC. As a detailed example, TN cell 1 2010 may have TAC#A and RACs 1, 2, 3, and 4. TN cell 2 2020 may have TAC#A and RACs 7, 8, 9, and 10, and TN cell 4 2040 may have TAC#C and RAC 1. That is, each cell may have a TAC and a RAC depending on a location of service coverage. Here, each cell may notify the UE of its TAC and RAC through system information. The UE may verify the TAC and the RAC of the cell through the system information.

Also, referring to FIG. 21, coverage of NTN cell A may be determined based on a satellite 2110. The UE in the RRC idle state may perform initial access and then be assigned with a registration area (RA) as an area in which the UE may move, without performing registration update from an AMF. Here, the RA includes a plurality of TACs. As a detailed example, if the UE is assigned the RA having TACs A, B, and C, the UE in the RRC idle state may move to a cell having TACs A, B, and C without performing a registration update procedure from the AMF. On the other hand, if the UE moves to a cell having TAC D, the UE may perform the registration update procedure to the AMF and then be assigned a new RA.

For example, the UE may be assigned a RA including all TACs shown in FIG. 21 (TACs A, B, C, D, E, F, and G) from the AMF, but is only an example and is not limited to the aforementioned embodiment. That is, the UE may move within the RA without the registration update procedure to the AMF and may camp on a cell having a single TAC within the RA.

For example, in a state in which the UE is present in a TAC#B area, the UE may camp on TN cell 6 having TAC#B around the UE. Then, when the UE moves to TAC#D based on UE mobility, the UE may perform camping on an NTN cell since there is no TN cell with sufficiently strong signal strength. Here, since NTN cell A services a wider area than the TN cell, a plurality of TACs may be transmitted to the UE through system information. The UE may derive a TAI by selecting a single TAC belonging to the RA from among the plurality of TACs included in the system information.

Also, the UE in the RRC idle state may receive configuration of cell reselection parameters for camping through an RRC message (e.g., RRC Release, SIB2, 3, 4). That is, when the UE having shifted to the RRC idle state at the TAC#B location receives configuration for cell reselection parameters for an NTN cell from TN cell 6, the UE needs to continuously search for an NTN cell within the RA. Here, since the NTN cell is present within the RA, the network may configure cell reselection parameters for the NTN cell with the RRC message. However, since the UE is incapable of camping on the NTN cell in an area other than TAC#A, D, E, F, and G serviced by NTN cell A, performing a cell search may increase unnecessary power consumption. Also, since the TN cell supports higher QoS than the NTN cell, the UE camping on the TN cell may not need to camp on the NTN cell through cell reselection.

Therefore, based on Table 6 above, in an area in which signal strength of a serving cell is insufficient and an SSB of the NTN cell is receivable, the UE camping on the TN cell may require an NTN cell search. As a detailed example, if the signal strength is insufficient on the cell edge, the UE camping on TN cell 3 with TAC#A, RACs 3, 4, 5, and 6 or TN cell 4 with TAC#C, RAC 1 may perform a cell search for NTN cell A. Therefore, through a procedure of searching, by the UE, for an NTN cell in a specific cell, it is possible to reduce power consumption of the UE in the RRC idle state.

In more detail, the network may include, in a RAC list, a combination list of TAC#A, RACs 3, 4, 5, and 6 and TAC#C, RAC 1 capable of detecting an SSB of NTN cell A serviced by NTN cell A for an NTN cell search. Then, the network may set NTN cell reselection parameters and may configure the same in the UE through the RRC message. For example, the UE present in TAC#B may receive configuration of NTN cell reselection parameters and the RAC list (TAC#A, RAC 3, 4, 5, and 6 and/or TAC#C, RAC 1) through the RRC message (e.g., system information, RRC Release) in TN cell 6. Since the UE is camping on TN cell 6 with a TAC and a RAC not configured within the RAC list in TAC#B, the UE may perform only a TN cell search without performing the NTN cell search. Also, if the UE moves to TAC#C based on UE mobility, the UE may be camping on TN cell 5 having TAC#C since the UE performs only search for a TN cell. Here, the TAC and RAC combination of TN cell 5 may not be configured in the RAC list. Therefore, the UE may not perform the NTN cell search. On the other hand, in the case of camping on a TN cell (e.g., TN cell 1, 3, 4) with the TAC and RAC combination indicated in the RAC list according to UE mobility, the UE may perform the NTN cell search based on the configured NTN cell reselection parameters. Also, although the UE is camping on the TN cell with the TAC and RAC combination indicated in the RAC list, the UE may prioritize the TN cell since the TN cell supports higher QoS. Therefore, the UE camping on the TN cell needs to perform the NTN cell search through a procedure of verifying the signal strength of the serving cell as well as the RAC list.

FIG. 22 illustrates a RAC list-based NTN cell measurement signaling procedure applicable to the present disclosure. Referring to FIG. 22, a UE 2210 may receive an RRC message in an RRC connected/inactive/idle state from a TN cell A 2220 (S300). Here, the UE may acquire and configure parameters (e.g., Cellreselection) including a specific condition (RAC list) and frequency information for cell reselection within the RRC message, SMTC, and other information. Then, the UE 2210 may shift to an RRC idle state (S305). For example, if an amount of time elapses or an RRC release message is received, the UE 2210 may shift to the RRC idle state. Here, the UE 2210 in the RRC idle state is camping on TN cell A 2220 (S310) and may perform frequency measurement based on the configured parameters. In detail, the UE 2210 may perform frequency measurement for intra/inter-frequency according to the parameters (e.g., Cellreselection) including frequency information, the SMTC, and other information. Then, the UE 2210 may require cell reselection with a new cell based on UE mobility (S315). For example, the UE 2210 may select TN cell B 2230 through a cell reselection procedure. The UE 2210 may receive an RRC message (e.g., system information) of TN cell B 2230 and may receive parameters having TAC#B and RAC#10 associated with TN cell B 2230 (S320). Here, TAC#B and RAC#10 may not be included in the RAC list. Therefore, the UE 2210 caping on TN cell B 2230 may not perform an NTN cell measurement and search (S325). Then, the UE 2210 may reselect a new cell based on UE mobility (S330). The UE 2210 may select TN cell C 2240 through the cell reselection procedure. Then, the UE 2210 may receive an RRC message (e.g., system information) of TN cell C 2240 and may receive parameters having TAC#B and RAC#1 associated with TN cell C 2240 (S335). For example, cell TAC#B and RAC#1 may be included in the RAC list. Therefore, the UE 2210 camping on TN cell C 2240 (S340) may perform the NTN cell measurement and search. That is, the UE 2210 may verify the signal strength and the signal quality of TN cell C 2240 and, if they are less than a specific value, may perform the NTN cell measurement and search (S345). As another example, the UE 2210 may perform the NTN cell measurement and search without a procedure of verifying the signal strength and the signal quality of TN cell C 2240 that is the serving cell.

Here, at least one TAC expressed as 24-bit string may be configured in the RAC list. Also, each TAC may include at least one RAC integer. Here, a TAC and a RAC may be differently configured depending on PLMN (MCC + MNC). Also, for example, a UE in an RRC idle/inactive state may have a plurality of PLMNs on which the UE may camp. A RA may be configured with a plurality of TACs for each PLMN. The network may configure the RAC list for each PLMN or may configure an RAC according to a TAI in the UE. Here, since the TAI includes a PLMN and a TAC, a plurality of TAI and RAC combinations may be configured within the RAC list. Also, the RAC list is only an example and is not limited to the name.

FIG. 23 illustrates a method of performing measurement based on at least one of TAC, cell, and RAC lists applicable to the present disclosure. For example, when a plurality of cells is present within a single TAC, a network may provide at least one of TAC, cell, and RAC lists to a UE for NTN cell measurement, which may lead to reducing power consumption.

For example, the UE receiving configuration of the TAC list (e.g., TACs 10 and 11) of FIG. 16 may measure an NTN cell according to the signal strength of a serving cell while camping on TN cells 5, 6, 9 and 10 with TAC 10 or 11. Here, if the UE camps on TN cells 9 and 10, the UE may not need to perform NTN cell measurement due to presence of adjacent TN cell 5 or 6. Therefore, the network may configure at least one of one or more combinations of TAC, cell, and RAC lists in the UE for NTN cell measurement. As a detailed example, the aforementioned combination may be TAC and cell lists or RAC and cell lists, but it is only an example and is not limited to the aforementioned embodiment.

FIG. 24 illustrates an NTN cell measurement signaling procedure based on at least one of TAC, cell, and RAC lists applicable to the present disclosure. Referring to FIG. 24, a UE 2410 may receive an RRC message in an RRC connected/inactive/idle state from TN cell A 2420 (S400). Here, the RRC message may include parameters (e.g., Cellreselection) including a specific condition (RAC list) and frequency information for cell reselection, SMTC, and other information. Then, the UE 2410 may shift to an RRC idle state (S405). For example, if an amount of time elapses or an RRC release message is received, the UE 2410 may shift to the RRC idle state. Here, the UE 2410 in the RRC idle state is camping on TN cell A 2420 (S410) and may perform frequency measurement based on the configured parameters. In detail, the UE 2410 may perform frequency measurement for intra/inter-frequency according to the parameters (e.g., Cellreselection) including frequency information, SMTC, and other information. Then, the UE 2410 may require cell reselection with a new cell based on UE mobility (S415). For example, the UE 2410 may select TN cell B 2430 through a cell reselection ranking procedure. The UE 2410 may receive an RRC message (e.g., system information) of TN cell B 2430 and may receive parameters having TAC#B and cell ID (cell B) associated with TN cell B 2430 (S420). Here, TAC#B may be included in the TAC list, but the cell ID (cell B) may not be included in the cell list. Therefore, the UE 2410 camping on TN cell B 2430 may not perform NTN cell measurement and search (S425). Then, the UE 2410 may reselect a new cell based on UE mobility (S430). The UE 2410 may select TN cell C 2440 through the cell reselection ranking procedure. Then, the UE 2410 may receive an RRC message (e.g., system information) of TN cell C 2440 and may receive parameters having TAC#B and a cell ID (cell C) associated with TN cell C (S435). For example, cell TAC#B and the cell ID (cell C) may be included in the TAC list and the cell list. Therefore, the UE 2410 camping on TN cell C 2440 (S440) may perform the NTN cell measurement and search. That is, the UE 2410 may verify the signal strength and the signal quality of TN cell C 2440 that is a serving cell and, if they are less than a specific value, may perform the NTN cell measurement and search (S445). As another example, the UE 2410 may perform the NTN cell measurement and search without a procedure of verifying the signal strength and the signal quality of TN cell C 2440 that is the serving cell. Although FIG. 24 illustrates an embodiment based on the TAC list and cell list combination, combination of RAC and cell lists may be possible, which is not limited to a specific embodiment.

Here, for example, a TAC and a RAC and a cell ID may be differently configured based on a PLMN (MCC + MNC). Also, a UE in an RRC idle/inactive state may have a plurality of PLMNs on which the UE may camp. Therefore, a RA may be configured with a plurality of TACs for each PLMN. The network may configure at least one of TAC, cell, and RAC lists for each PLMN. As another example, the network may configure at least one combination of TAI, NCGI, and RAC in the UE for each PLMN. Here, the TAI is configured using PLMN and TAC, and the NCGI is configured using PLMN and cell ID. Therefore, a plurality of TAI, NCGI, and RAC combinations may be configured within TAC and cell lists or RAC and cell lists. Also, for example, the TAC and cell lists and the RAC and cell lists are only examples and may not be limited to the names.

FIG. 25 illustrates a synchronization signal block (SSB) configuration applicable to the present disclosure. Referring to FIG. 25, a cell may provide SSB configuration information to a UE through system information (e.g., SIB1). FIG. 25 may illustrate a case in which a subcarrier spacing (SCS) is 15 kHz, frequency band is 3 to 6 GHz, and the maximum number of SSBs available at 6 GHz within SIB1 is 8. Also, in FIG. 25, inOneGroup indicating an SSB used for actual transmission among eight SSBs may be (1 1 1 1 1 1 0 1), but it is only an example and is not limited to the aforementioned embodiment. Here, a symbol location of an SSB may be predefined for each specific subcarrier spacing and frequency band. For example, in FIG. 25, an SSB starting symbol of candidate SSBs may be determined through Equation 3 below, and an SBS may be transmitted at symbol indexes 2, 8, 16, 22, 30, 36, 44, and 50 based on Equation 3.

$$[\text{Equation 3}]$$

$$\{2, 8\} + 14n \ (n: 0, 1, 2, 3)$$

For example, an SSB actually transmitted in the network may differ depending on an environment. Therefore, the network may inform the UE of actual SSB transmission through SIB1 using a bitmap format (e.g., inOneGroup). In FIG. 25, since inOneGroup is configured as (1 1 1 1 1 1 0 1), SSBs 2510, 2520, 2530, 2540, 2550, 2560, and 2570 excluding SSB#6 among eight SSBs may be transmitted. For example, if the frequency band is 3 GHz or less, the maximum number of SSBs may be 4 and the SSB starting symbol of the candidate SSBs may be as shown in Equation 4 below, and SSBs may be transmitted form symbols 2, 8, 16 and 22.

$$[\text{Equation 4}]$$

$$\{2, 8\} + 14n \ (n: 0, 1)$$

As another example, in FR2, the maximum number of SSBs may be 64. Here, SIB1 may divide 64 SSBs in 8 groups in order and may include groupPresence indicating from which group an SSB is transmitted. As a detailed example, when groupPresence is (1 0 0 0 0 0 0 1), and inOneGroup is configured as (1 1 0 0 0 0 0 0), indexes of actually transmitted SSBs may be 0, 1, 56, and 57. Here, an SSB burst set may be configured within 5 ms and may be repeatedly transmitted at specific intervals.

FIG. 26 illustrates an SMTC window configuration configured in a network for measuring a specific frequency applicable to the present disclosure. Referring to FIG. 26, the network may configure an SMTC window in the UE for neighboring cell 1 2610 and neighboring cell 2 2620. That is, the network may indicate the UE to perform measurement during a specific period of time every specific periodicity in a time domain such that the UE may measure SSBs of neighboring cell 1 2610 and neighboring cell 2 2610, and may provide this configuration information. Here, the UE may configure SMTC window periodicity to be greater than SSB periodicity in consideration of the power consumption. For example, the network may set SMTC window configuration for each SSB periodicity of neighboring cell 2 2620 such that the UE may measure an SSB of neighboring cell 2 2620. Also, the network may set SMTC window configuration to be longer than SSB periodicity of neighboring cell 1 2610 such that the UE may measure an SSB of neighboring cell 1 2610.

Here, the UE may perform an operation for SSB search in an SMTC window duration based on step size of GSCN in NR-ARFCN indicating the specific frequency band for the aforementioned intra/inter-frequency measurement.

For example, when TN frequency information for cell reselection in an NTN cell is configured in the UE, the UE may perform SSB measurement for every set SMTC window configuration and power consumption may continue accordingly. Considering the above, a procedure of not performing measurement according to a specific condition (TAC list and/or cell list and/or RAC list) may be required.

For example, since a TN cell may satisfy higher QoS than an NTN cell, the UE may prioritize the TN cell at all times. That is, when the NTN cell configures measurement for the TN cell in the UE, the NTN cell may set TN priority to be high at all times. Therefore, a conditional TN cell measurement and search procedure needs to be added. On the contrary, when the UE is camping on the TN cell, the UE may perform measurement for a low-priority NTN cell if the signal strength of a serving cell decreases. Here, there may be a case in which the UE camping on the TN cell does not need measurement for the NTN cell. Therefore, a conditional NTN cell measurement and search procedure needs to be added to reduce power consumption of the UE. For example, the UE may measure the NTN frequency according to the aforementioned specific condition (at least one combination of TAC list, cell list, and RAC list), and a procedure for this is described below. When inter-frequency information is configured in the UE based on an RRC message (e.g., system information, RRC release), the UE may perform measurement according to the specific condition (at least one combination of TAC list, cell list, and RAC list).

For example, Table 7 may represent a method of performing, by the UE, measurement. In detail, as a case in which priority of inter-frequency or inter-RAT frequency is equal to or lower than current frequency, when the signal strength and the signal quality of a serving cell are less than a specific value, the UE may perform measurement in consideration of the aforementioned specific condition (at least one combination of TAC list, cell list, and RAC list), which may be as shown in Table 7below.

As another example, if the priority of inter-frequency or inter-RAT frequency is equal to or lower than the current frequency, the UE may perform measurement in consideration of the aforementioned specific condition (at least one combination of TAC list, cell list, and RAC list).

[Table 7]

| |
|---|
| If priority of NR inter-frequency or inter-RAT frequency is higher than that of current NR frequency:<br>   • UE performs NR inter-frequency or inter-RAT frequency measurement at all times.<br>If priority of NR inter-frequency or inter-RAT frequency is equal to or lower than that of current NR frequency:<br>   • If signal strength (Srxlev) and signal quality (Squal) of a serving cell are greater than signal strength threshold (s-NonIntraSearchP) and signal quality threshold (s-NonIntraSearchQ) within SIB2:<br>     - If a UE-reference location distance is less than distance threshold within SIB19 provided from the serving cell, UE may not perform NR inter-frequency or inter-RAT frequency measurement.<br>     - If a UE-reference location distance is greater than distance threshold within SIB19 provided from the serving cell, UE performs NR inter-frequency or inter-RAT frequency measurement at all times.<br>     - If there is no distance threshold within SIB 19 provided from the serving cell, UE may not perform NR inter-frequency or inter-RAT frequency measurement.<br>   • If signal strength (Srxlev) and signal quality (Squal) of the serving cell are less than signal strength threshold (s-NonIntraSearchP) and signal quality threshold (s-NonIntraSearchQ) within SIB2:<br>     - **If a specific condition (at least one combination of TAC list, cell list , and RAC list) is provided and a camping cell does not satisfy the specific condition, UE may not perform NR inter-frequency or inter-RAT frequency measurement.**<br>     - **If the specific condition (at least one combination of TAC list, cell list, and RAC list) is provided and a camping cell satisfies the specific condition, UE performs NR inter-frequency or inter-RAT frequency measurement.**<br>     - **If the specific condition (at least one combination of TAC list, cell list, and RAC list) is not provided, UE performs NR inter-frequency or inter-RAT frequency measurement.** |

Here, the specific condition (at least one combination of TAC list, cell list, and RAC list) may be commonly configured for all NTN frequency bands within the RRC message. As another example, the specific condition (at least one combination of TAC list, cell list, and RAC list) may be configured only for a specific NTN frequency band and is not limited to a specific embodiment.

As a detailed example, if the aforementioned specific condition (at least one combination of TAC list, cell list, and RAC list) is configured for all NTN frequencies as a single common parameter within the RRC message, the common parameter may be configured in at least one of SIB2, SIB3, and SIB4. If the aforementioned specific condition (at least one combination of TAC list, cell list, and RAC list) is satisfied, the UE may perform measurement for all NTN frequencies, which may be as shown in Table 7 above. As another example, if the aforementioned specific condition (at least one combination of TAC list, cell list, and RAC list) is configured only for a specific NTN frequency band, the network may configure the aforementioned specific condition (at least one combination of TAC list, cell list, and RAC list) for each NTN frequency. The UE may measure only the NTN frequency that satisfies the aforementioned specific condition (at least one combination of TAC list, cell list, and RAC list). Here, the NTN frequency may refer to a specific frequency band and is not limited to a specific embodiment.

As another example, conditions for the UE to perform measurement for intra-frequency cell reselection indicated through system information may be as shown in Table 8 below. That is, the UE may compare the signal strength and the signal quality of a serving cell to a specific value.

[Table 8]

| |
|---|
| If signal strength (Srxlev) and signal quality (Squal) of a serving cell are greater than signal strength threshold (s-IntraSearchP) and signal quality threshold (s-IntraSearchQ) within SIB3:<br>  • If a UE-reference location distance is less than distance threshold within SIB19 provided from a serving cell, UE may not perform intra-frequency measurement.<br>  • If a UE-reference location distance is greater than distance threshold within SIB19 provided from the serving cell, UE performs intra-frequency measurement at all times.<br>  • If there is no distance threshold within SIB19 provided from the serving cell, UE may not perform intra-frequency measurement.<br>if signal strength (Srxlev) and signal quality (Squal) of the serving cell are less than signal strength threshold (s-IntraSearchP) and signal quality threshold (s-IntraSearchQ):<br>  • UE performs intra-frequency measurement at all times. |

Here, the UE may perform NTN frequency measurement according to the aforementioned specific condition (at least one combination of TAC list, cell list, and RAC list). For example, when the UE receives and configures intra-frequency information through the RRC message (e.g., system information, RRC release), the UE may verify the aforementioned specific condition (at least one combination of TAC list, cell list, and RAC list) and then perform measurement, which may be as shown in Table 9 below.

[Table 9]

| |
|---|
| If signal strength (Srxlev) and signal quality (Squal) of a serving cell are greater than signal strength threshold (s-IntraSearchP) and signal quality threshold (s-IntraSearchQ) within SIB3:<br>  • If a UE-reference location distance is less than distance threshold within SIB19 provided from a serving cell, UE may not perform intra-frequency measurement.<br>  • If a UE-reference location distance is greater than distance threshold within SIB19 provided from the serving cell, the UE performs Iintra-frequency measurement at all times.<br>  • If there is no distance threshold within SIB19 provided from the serving cell, UE may not perform intra-frequency measurement.<br>If signal strength (Srxlev) and signal quality (Squal) of the serving cell are less than signal strength threshold (s-IntraSearchP) and signal quality threshold (s-IntraSearchQ):<br>  • **If a specific condition (TAC list and/or Cell list and/or RAC list) is provided and a <u>camping cell does not satisfy the specific condition, UE may not perform intra-frequency measurement.</u>**<br>  • **If the specific condition (TAC list and/or Cell list and/or RAC list) is provided and a <u>camping cell satisfies the specific condition, UE performs intra-frequency</u> measurement.**<br>  • **If the specific condition (TAC list and/or Cell list and/or RAC list) is not provided, <u>UE performs intra-frequency measurement.</u>** |

Also, for example, if t-service of the serving cell is present within system information (e.g., SIB19), the UE may perform intra-frequency measurement before T-service regardless of conditions shown in Table 9 below. Here, T-service may refer to an epoch time during which a fixed cell services the coverage. As another example, the UE may perform measurement for high-priority intra-frequency at all times regardless of conditions shown in Table 9.

As described above, for the UE to conditionally perform measurement for the NTN cell, the aforementioned specific condition (at least one combination of TAC list, cell list, and RAC list) for indicating or measuring TN/NTN may be added to parameters within the existing system information. That is, as the existing system information, the aforementioned specific condition (at least one combination of TAC list, cell list, and RAC list) for indicating or measuring TN/NTN may be added in addition to inter/intra-frequency information priority for cell reselection, SMTC, NR-absolute radio frequency channel number (ARFCN), band list, and other information. That is, the aforementioned specific condition (at least one combination of TAC list, cell list, and RAC list) may be included in parameter configuration for cell reselection. Here, as described above, the aforementioned specific condition (at least one combination of TAC list, cell list, and RAC list) may be configured with a single common parameter for all bands or may be configured with a specific parameter for a specific NTN frequency band, for NTN frequency measurement.

### 2. Conditional TN cell search (frequency measurement)

For example, regarding a conditional TN cell search, a method of performing a cell search based on a reference location of a neighboring TN cell (hereinafter, method 2-1) and a method of performing a cell search based on a reference location of a neighboring NTN cell (hereinafter, method 2-2) may be considered. Here, in an NTN system, each of method 2-1 and method 2-2 may be independently applied. As another example, method 2-1 may be preferentially applied and method 2-2 may be applied in some cases in which it is difficult to apply method 2-1. However, it is not applied to a specific embodiment. In the following, the description is made based on each of method 2-1 and method 2-2 for clarity of description, but each of methods may be applied through mutual association or through mutual complementation and is not limited to a specific embodiment.

### Method 2-1 (neighboring TN cell reference location based cell search)

FIG. 27 illustrates a method of performing a cell search based on a neighboring TN cell reference location applicable to the present disclosure. Referring to FIG. 27, the UE may perform measurement for TN frequency based on a reference point (or reference location). Here, the UE in an RRC idle/inactive state may reduce power consumption by performing measurement for the TN frequency based on a predetermined condition. For example, the network may configure a specific point at which the TN cell is present in the UE as a reference location through at least one RRC message (e.g., system information, RRC release, RRC reconfiguration). For example, the reference location may be a specific point at which the TN cell is present. As another example, the reference location may be set as a preset specific location based on the TN cell and may not be limited to a specific embodiment.

Here, the UE may verify whether location information of the UE is valid. When the location information of the UE is valid, the UE may compare a difference between a reference point configured by the network and the UE to a threshold. Here, if the distance between the reference point configured by the network and the UE is less than the threshold, the UE may perform TN frequency measurement.

As a detailed example, a UE 2720 within satellite 1 2710 of FIG. 27 may verify a distance from reference point 1 (reference location 1) 2730. Here, if the distance from reference point 1 2730 is greater than or equal to a threshold, the UE 2720 may not perform TN frequency measurement. On the other hand, a UE 2750 within satellite 2 2740 may receive configuration of two reference points (reference locations 1 2761 and reference location 2 2762) from the network. However, it is only an example for clarity of description and is not limited to the aforementioned embodiment. Here, when a location of the UE 2750 is valid, the UE 2750 may verify distances from reference locations. Then, the UE 2750 may determine whether to perform measurement for the TN frequency depending on the threshold. Considering the above, an NTN cell may provide the UE with information (e.g., reference location, distance threshold, associated frequency index) that assists TN cell measurement.

As a detailed example, NTN-specific system information (e.g., SIB19) may include information that assists the aforementioned TN cell measurement. As another example, information that assists the aforementioned TN cell measurement may also be included in the existing system information, and is not limited to a specific embodiment. The UE may verify information on a TN neighboring cell through system information received from the serving cell and, through this, may determine whether to perform TN-frequency measurement.

Here, information on the TN neighboring cell and information for cell reselection may be associated. For example, when a reference point for a neighboring cell is provided to the UE as system information, the UE may determine a frequency band in which the UE performs measurement and an SMTC window associated therewith according to a distance between valid location information of the UE and the reference point and the threshold. Considering the above, information on the neighboring cell and measurement frequency band information may be associated such that the UE may determine the TN frequency measurement.

FIG. 28 illustrates a TN cell configuration applicable to the present disclosure. As described above, information on a TN neighboring cell and information for cell reselection may be related. For example, an NTN cell may be configured based on satellite 1 2810. Here, a UE 2820 may perform measurement for a TN neighboring cell in consideration of a reference point (or reference location) of the TN cell. Neighboring cell information (neighboring cell information) for TN cell 1 refers to information used to determine measurement and may include reference location 1 2831 of TN cell 1 and a distance threshold. Also, neighboring cell information for TN cell 1 may include at least one of a frequency band location (NR-ARFCN) and a TN index of TN cell 1 as information for cell reselection. Here, information for cell reselection may be associated with frequency information within the RRC message (e.g., system information, RRC Release). As a detailed example, when NR-ARFCN is designated as 'A' in TN cell 1, information for cell reselection may be associated with frequency information (InterFreqCarrierFreqInfo or MeasIdleCarrierNR 1, 2) in which NR-ARFCN is set to 'A' As another example, when the TN index is indicated as '1' in TN cell 1, information for cell reselection may be associated with frequency information (InterFreqCarrierFreqInfo or MeasIdleCarrierNR 1).

Also, when NR-ARFCN is designated as 'B' in TN cell 2 2832, information for cell reselection may be associated with frequency information (InterFreqCarrierFreqInfo or MeasIdleCarrierNR 3) in which NR-ARFCN is set to 'B.' As another example, when the TN index is indicated as '2' in TN cell 2 2832, information for cell reselection may be associated with frequency information (InterFreqCarrierFreqInfo or MeasIdleCarrierNR 2, 3).

In more detail, if a distance between the UE 2820 and TN cell 1 is less than a distance threshold, the UE 2820 may verify frequency information associated with at least one of NR-ARFCN and TN index. Then, the UE 2820 may verify an SSB in time/frequency corresponding to the SMTC and NR-ARFCN associated with the verified frequency information. Also, if a distance between the UE 2820 and TN cell 2 2832 is greater than a distance threshold, the UE 2820 may verify frequency information associated with NR-ARFCN and TN index and may not perform a procedure of verifying an SSB in a time/frequency corresponding to SMTC and NR-ARFCN associated with the frequency information. That is, the UE 2820 may perform a procedure of verifying an SSB in time/frequency corresponding to SMTC and NR-ARFCN associated with the corresponding frequency information only within the distance threshold based on a valid current location of the UE 2820 and reference location information configured for each TN cell.

Here, reference location information and the distance threshold configured for each TN cell may be included and thereby configured in frequency information (InterFreqCarrierFreqInfo or MeasIdleCarrierNR). For example, frequency information 1 (InterFreqCarrierFreqInfo or MeasIdleCarrierNR 1) may include NR-ARFCN and SMTC information. Also, frequency information 1 may additionally include reference location information and distance threshold information. The UE 2820 may determine whether to perform a procedure of verifying an SSB from time/frequency configuration (SMTC, NR-ARFCN) through information for determining measurement (reference location information, distance threshold), which is the same as described above. Here, reference location information on the reference location at which the TN cell is present may be as shown in Table 10 below. Here, Table 10 may refer to information represented in latitude and longitude.

[Table 10]

| Latitude range in degrees (°) | Latitude range represented with 11 bits | Number of bits representing the longitude | Longitude range | Number of steps a "latitude circle" is divided into |
|---|---|---|---|---|
| 0° - 59.978022° | 0 - 1364 | 13 | ±4095 | 8191 |
| 59.978022° - 75.538462° | 1365 - 1718 | 12 | ±2047 | 4095 |
| 75.538462° - 82.835165° | 1719 - 1884 | 11 | ±1023 | 2047 |
| 82.835165° - 86.439560° | 1885 - 1966 | 10 | ±511 | 1023 |
| 86.439560° - 88.197802° | 1967 - 2006 | 9 | ±255 | 511 |
| 88.197802° - 89.120879° | 2007 - 2027 | 8 | ±127 | 255 |
| 89.120879° - 89.560440° | 2028 - 2037 | 7 | ±63 | 127 |
| 89.560440° - 89.824176° | 2038 - 2043 | 6 | ±31 | 63 |
| 89.824176° - 89.912088° | 2044 - 2045 | 5 | ±15 | 31 |
| 89.912088° - 89.956044° | 2046 | 4 | ±7 | 15 |
| 89.956044° - 90° | 2047 | 3 | ±3 | 7 |

For example, as described above, since the TN cell may satisfy higher QoS than the NTN cell, the UE may preferentially select the TN cell at all times. That is, when the NTN cell configures measurement for the TN cell in the UE, the priority of the TN cell may be set to be high at all times. The UE may measure the TN cell at all times based on the aforementioned configuration. However, since the UE needs to measure the configured TN cell at all times, the power may be continuously consumed. Therefore, the UE may measure the TN frequency according to the aforementioned specific condition (distance threshold), thereby reducing the power consumption. In detail, in a procedure in which the UE measures the TN frequency, the UE may receive an RRC message (e.g., system information, RRC release). Here, the RRC message may include inter-frequency information. The UE may configure a measurement operation based on the inter-frequency information. Here, the aforementioned operation of verifying the specific condition (distance threshold) may be required, which may be as shown in Table 11 below. That is, the UE may perform measurement based on whether the priority of inter-frequency or inter-RAT frequency is higher than priority of current frequency, whether the signal strength and the signal quality of a serving cell is greater than a specific value, and whether a distance between a reference location of a target cell and the UE is greater than a distance threshold, which may be as shown in Table 11 below.

[Table 11]

| |
|---|
| If priority of inter-frequency or inter-RAT frequency is higher than that of current NR frequency:<br>    **• If a distance between UE and reference location of neighboring cell is less than distance threshold:**<br>        - UE performs NR inter-frequency or inter-RAT frequency measurement.<br>    **• Else If a distance between UE and reference location of neighboring cell is greater than distance threshold:**<br>        - UE may not perform NR inter-frequency or inter-RAT frequency measurement.<br>    **• Else information on reference location of neighboring cell and distance threshold is not provided:**<br>        - UE performs NR inter-frequency or inter-RAT frequency measurement at all times.<br>If priority of NR inter-frequency or inter-RAT frequency is equal to or lower than that of current NR frequency:<br>    • If signal strength (Srxlev) and signal quality (Squal) of a serving cell is greater than signal strength threshold (s-NonIntraSearchP) and signal quality threshold (s-NonIntraSearchQ) present within SIB2:<br>        - If a distance between UE and reference location is less than distance threshold within SIB19 provided from the serving cell, UE may not perform NR inter-frequency or inter-RAT frequency measurement.<br>        - If a distance between UE and reference location is greater than distance threshold within SIB19 provided from the serving cell, UE performs NR inter-frequency or inter-RAT frequency measurement at all times.<br>        - If there is no distance threshold within SIB19 provided from the serving cell, UE may not perform NR inter-frequency or nter-RAT frequency measurement.<br>    • If signal strength (Srxlev) and signal quality (Squal) of the serving cell are less than signal strength threshold (s-IntraSearchP) and signal quality threshold (s-IntraSearchQ) present within SIB2:<br>        - UE performs NR inter-frequency or inter-RAT frequency measurement at all times. |

Also, for example, the UE may measure the TN frequency according to the aforementioned specific condition (distance threshold), thereby reducing power consumption. In detail, in a procedure in which the UE measures the TN frequency, the UE may receive an RRC message (e.g., system information, RRC release). Here, the RRC message may include intra-frequency information. The UE may configure a measurement operation based on the intra-frequency information. Here, an operation of verifying the aforementioned specific condition (distance threshold) may be required, and this may be as shown in Table 12.

That is, the UE may perform measurement based on whether the intra-frequency is associated with an NTN cell or a TN cell, whether the signal strength and the signal quality of a serving cell are greater than a specific value, and whether a distance between a reference location of a target cell and the UE is greater than a distance threshold, which may be as shown in Table 11 below.

[Table 12]

| |
|---|
| If signal strength (Srxlev) and signal quality (Squal) of a serving cell are greater than signal strength threshold (s-IntraSearchP) and signal quality threshold (s-IntraSearchQ) within SIB3:<br>    • If intra-frequency is associated with NTN:<br>        **- If a distance between UE and reference location is less than distance threshold within SIB19 provided from the serving cell. UE may not perform intra-frequency measurement.**<br>        **- If a distance between UE and reference location is greater than distance threshold within SIB19 provided from the serving cell, UE performs intra-frequency measurement at all times.**<br>        **- If there is no distance threshold within SIB19 provided from the serving cell, UE may not perform intra-frequency measurement.**<br>    **• Else if intra-frequency is associated with TN:**<br>        **- If a distance between UE and neighbor reference location is greater than distance threshold. UE may not perform TN intra-frequency measurement.** |

(continued)

> - **If a distance between UE and neighbor reference location is less than distance** **threshold. UE performs TN intra-frequency measurement.**
>
> • Else, if intra-frequency is not indicated by NTN or TN, if reference location information of the serving cell is absent, or if reference location information of the neighboring cell is absent:
>
> - UE may not perform intra-frequency measurement.
>
> If signal strength (Srxlev) and signal quality (Squal) of the serving cell are less than signal strength threshold (s-IntraSearchP) and signal quality threshold (s-IntraSearchQ) within SIB3:
>
> • **If intra-frequency is associated with TN:**
>
> - **If a distance between UE and neighbor reference location is greater than distance threshold. UE may not perform TN intra-frequency measurement.**
>
> - **If a distance between UE and neighbor reference location is less than distance threshold. UE performs TN intra-frequency measurement.**
>
> • Else, if intra-frequency is not indicated by NTN or TN, if there is no reference location information of the serving cell, or if there is no reference location information of the neighboring cell:
>
> - UE performs intra-frequency measurement.

## Method 2-2 (neighboring NTN cell reference location based cell search)

FIG. 29 illustrates an NTN cell reference location applicable to the present disclosure. For example, for clarity of description, description is made based on an example in which reference location information is configured in an area in which a TN cell is present in FIG. 29, but may not be limited thereto. For example, a reference location may be configured as edge of the TN cell. As another example, the reference location may be a reference location of a neighboring NTN cell.

Referring to FIG. 29, a plurality of NTN cells may be configured based on satellite 1 2910. Here, a reference location of a neighboring cell may not be derived based on a TN cell and may be derived based on an NTN neighboring cell. As a detailed example, there may be cases in which the reference location of the TN cell may not be set due to security issues. In the above situation, a cell search may be performed based on a reference location of an NTN cell. For example, in FIG. 29, cells A, B, C, D, E, F, and G may be NTN cells based on earth fixed beam according to satellite 1 2910. Here, each NTN cell may provide reference location information to a UE 2920. The UE 2920 may control measurement based on reference location information received from each NTN cell.

For example, if the UE 2920 is camping on cell B, the UE 2920 may acquire a reference location 2931 of cell B through system information. As another example, if the UE 2920 is camping on cell G, the UE 2920 may acquire a reference location 2931 of cell G through system information. Here, a case in which a TN cell is present at a location overlapping with cells B, C, and D may be considered. Here, the network may control measurement for the TN cell by providing a reference location of a neighboring cell to the UE 2920.

As a detailed example, if the UE 2920 is camping on cell B, cell B may provide the UE with the reference location 2931 of cell B (reference location of NTN cell B) and a reference location 2932, 2933 of a neighboring cell (reference location of NTN cell C and/or reference location of NTN cell D) through an RRC message. The UE 2920 may determine measurement for the TN cell through a distance from at least one of the reference location 2931 of cell B that is a serving cell and the reference locations 2932 and 2933 of the neighboring cells. In more detail, the UE 2920 may determine whether the reference location 2931 of cell B that is the serving cell is greater than a specific threshold. Also, the UE 2920 may verify whether a distance from the reference location of the neighboring cell is greater than a threshold. That is, the UE 2920 may determine whether to perform TN cell measurement based on information that compares the reference location of the serving cell and the threshold and information that compares the reference location of the neighboring cell and the threshold.

For example, as described above, since the TN cell may satisfy higher QoS than the NTN cell, the UE may preferentially select the TN cell at all times. That is, when the NTN cell configures measurement for the TN cell in the UE, priority of the TN cell may be set to be high at all times. The UE may measure the TN cell at all times based on the aforementioned configuration. However, since the UE needs to measure the configured TN cell at all times, power may be continuously consumed. Therefore, the UE may reduce power consumption by measuring the TN frequency according to the aforementioned specific condition (distance threshold). In detail, in a procedure in which the UE measures the TN frequency, the UE may receive an RRC message (e.g., system information, RRC release). Here, the RRC message may include inter-frequency information. The UE may configure a measurement operation based on the inter-frequency information. Here, an operation of verifying the aforementioned specific condition (distance threshold) may be required, and this may be as shown in Table 13 below.

[Table 13]

| |
|---|
| If priority of NR inter-frequency or inter-RAT frequency is higher than that of current NR frequency: |
| If NR inter-frequency or inter-RAT frequency is associated with TN: and/or |
| **If a distance between UE and serving cell reference location is greater than distance threshold and a distance between UE at least one neighboring cell reference location is less than distance threshold:** |
| ☐ UE performs NR inter-frequency or inter-RAT frequency measurement. |
| **Else if a distance between UE and serving cell reference location is less than distance threshold and a distance between UE and at least one neighboring cell reference location is greater than the distance threshold:** |
| ☐ UE may not perform NR inter-frequency or inter-RAT frequency measurement. |
| Else if NR inter-frequency or inter-RAT frequency is indicated by NTN or not indicated: |
| ☐ UE performs NR inter-frequency or inter-RAT frequency measurement at all times. |
| If priority of NR inter-frequency or inter-RAT frequency is equal to or lower than that of current NR frequency: |
| If signal strength (Srxlev) and signal quality (Squal) of the serving cell are greater than signal strength threshold (s-NonIntraSearchP) and signal quality threshold (s-NonIntraSearchQ) within SIB2: |
| ☐ If a distance between UE and reference location is less than distance threshold within SIB19 provided from the serving cell, UE may not perform NR inter-frequency or inter-RAT frequency measurement. |
| ☐ If a distance between UE and the reference location is greater than distance threshold within SIB19 provided from the serving cell, UE performs NR inter-frequency or inter-RAT frequency measurement at all times. |
| ☐ If there is no distance threshold within SIB19 provided from the serving cell, UE may not perform NR inter-frequency or inter-RAT frequency measurement. |
| If signal strength (Srxlev) and signal quality (Squal) of the serving cell are less than signal strength threshold (s-IntraSearchP) and signal quality threshold (s-IntraSearchQ) within SIB2: |
| ☐ UE performs NR inter-frequency or inter-RAT frequency measurement at all times. |

Also, for example, the UE may reduce power consumption by measuring the TN frequency according to the aforementioned specific condition (distance threshold). In detail, in a procedure in which the UE measures the TN frequency, the UE may receive an RRC message (e.g., system information, RRC release). Here, the RRC message may include intra-frequency information. The UE may configure a measurement operation based on the intra-frequency information. Here, an operation of verifying the aforementioned specific condition (distance threshold) may be required, which may be as shown in Table 14 below.

[Table 14]

| |
|---|
| If signal strength (Srxlev) and signal quality (Squal) of a serving cell are greater than signal strength threshold (s-IntraSearchP) and signal quality threshold (s-IntraSearchQ) within SIB3: |
| If intra-frequency is associated with NTN: |
| ☐ If a distance between UE and reference location is less than distance threshold within SIB19 provided from the serving cell, UE may not perform intra-frequency measurement. |
| ☐ If a distance between UE and reference location is greater than distance threshold within SIB19 provided from the serving cell, UE performs intra-frequency measurement at all times. |
| ☐ If there is no distance threshold within SIB19 provided from the serving cell, UE may not perform Intra-frequency measurement. |
| Else if intra-frequency is associated with TN: |
| ☐ **If a distance between UE and serving cell reference location is greater than distance threshold and a distance between UE and at least one neighboring cell reference location is less than distance threshold: UE performs intra-frequency measurement.** |
| ☐ **If a distance between UE and serving cell reference location is less than distance threshold and a distance between UE and at least one neighboring cell reference location is greater than distance threshold. UE may not perform intra-frequency measurement.** |
| Else if intra-frequency is not indicated by NTN or TN, if there is no reference location information of the serving cell, or if there is no reference location information of the neighboring cell: |
| ☐ UE may not perform intra-frequency measurement. |
| If signal strength (Srxlev) and signal quality (Squal) of the serving cell are less than signal strength threshold (s-IntraSearchP) and signal quality threshold (s-IntraSearchQ) within SIB3: |

(continued)

| |
|---|
| If intra-frequency is associated with TN:<br>☐ **If a distance between UE and serving cell reference location is greater than distance threshold and a distance between UE and at least one neighboring cell reference location is less than distance threshold. UE performs TN intra-frequency measurement.**<br>☐ **If a distance between UE and serving cell reference location is less than distance threshold and a distance between UE and at least one neighboring cell reference location is greater than distance threshold. UE may not perform TN intra-frequency measurement.**<br>Else if intra-frequency is not indicated by NTN or TN, if there is no reference location information of the serving cell, or if there is no reference location information of the neighboring cell:<br>☐ UE performs intra-frequency measurement. |

FIG. 30 is a flowchart illustrating a method of performing a conditional NTN cell search applicable to the present disclosure.

Referring to FIG. 30, a UE may acquire condition information on cell reselection through an RRC message (S3010). Here, the condition information on cell reselection may be configured based on at least one of a TAC list, a RAC list, and a cell list. Here, for example, the UE may receive the RRC message and may shift to an idle state. Then, the UE may move from a camping first cell to a second cell based on mobility of the UE (S3020). Here, the UE may receive an RRC message including measurement related information for cell reselection from the second cell (S3030). For example, the measurement related information for cell reselection may include at least one of a TAC list, a RAC list, and a cell ID. Then, the UE may verify whether a specific condition is satisfied based on measurement related information for cell reselection received from the second cell (S3040). Here, as described above, the specific condition may be a condition for determining whether NTN cell measurement and search is required based on at least one of the aforementioned TAC list, RAC list, and cell ID list. For example, as described above, when the specific condition is satisfied based on information acquired from the second cell, an NTN cell search may be performed (S3050).

FIG. 31 is a flowchart illustrating a method of performing a conditional TN cell search to which the present disclosure may apply. Referring to FIG. 31, the UE may acquire reference location information and distance threshold information on each of at least one cell through an RRC message (S3110). Here, the at least one cell may be a TN cell or an NTN cell. For example, in the case of the TN cell, the reference location information may be a specific point at which the TN cell is present. As another example, the reference location information may be a location determined based on the TN cell, and is not limited to a specific embodiment. In the case of the NTN cell, the reference location information may be information derived based on the NTN cell. Then, the UE may derive distance condition information based on the reference location information and the distance threshold information on each of the at least one cell (S3120). Then, as described above, the UE may perform a TN cell search based on its current location and the distance condition information (S3130).

FIG. 32 is a diagram illustrating a first apparatus and a second apparatus to which the present disclosure may be applied.

Referring to FIG. 32, the first apparatus (3200) and the second apparatus (3250) perform communication with each other. At this time, as an example, the first apparatus (3200) may be a base station and the second apparatus (3250) may be a user equipment (UE) device. As another example, both the first apparatus (3200) and the second apparatus (3250) may be UE devices. That is, the first apparatus (3200) and the second apparatus (3250) may be apparatus that perform communication with each other based on NR-based communication. As an example, a case may be considered where the first apparatus (3200) is a base station and the second apparatus (3250) is a UE device. At this time, the base station device 3200 may include a processor 3220, an antenna unit 3212, a transceiver 3214, and a memory 3216.

The processor 3220 performs a baseband-related signal processing and may include a higher-layer processor 3230 and a physical layer processor 3240. The higher layer processor 3230 may process the operation of a medium access control (MAC) layer, a radio resource control (RRC) layer, or a higher layer thereof. The physical layer processor 3240 may process the operation of the physical (PHY) layer (e.g., uplink receive signal processing, downlink transmission signal processing). Also, to perform baseband-related signal processing, the processor 3220 may also control the operation of the base station device 3200 as a whole. The antenna unit 3212 may include one or more physical antennas, and may support the multiple input multiple output (MIMO) transmission and reception in the case of including a plurality of antennas. Also, beamforming can be supported. The memory 3216 may store computationally processed information of the processor 3220, software, operating systems, applications, and the like related to the operation of the base station device 3200, and may include components such as buffers. The processor 3220 of the base station 3200 may be configured to implement the operation of the base station in the example described herein.

The UE device 3250 may include a processor 3270, an antenna unit 3262, a transceiver 3264, and a memory 3266. For example, in the present invention, the UE device 3250 may perform communication with the base station device 3200. As another example, in the present invention, the UE device 3250 may perform SL communication with another UE device. That is, the UE device 3250 of the present invention refers to a device capable of communicating with at least one of the base station device 3200 and the other UE devices and is not limited to communication with a specific device. The processor 3270 performs baseband-related signal processing and may include a higher-layer processor 3280 and a physical layer processor 3290. The higher layer processor 3280 may process the operation of the MAC layer, the RRC layer, or the higher layer. The physical layer processor 3290 may process the operations of the PHY layer (e.g., downlink receive signal processing, uplink transmission signal processing). Also, to perform baseband-related signal processing, the processor 3270 may also control the operation of the UE device 3250 as a whole. The antenna unit 3262 may include one or more physical antennas, and may support MIMO transmission and reception in the case of including a plurality of antennas. Also, beamforming can be supported. The memory 3266 may store computationally processed information of the processor 3270, software, operating systems, applications, and the like related to the operation of the UE device 3250, and may include components such as buffers. The UE device 3250 according to an example of the present invention may be associated with a vehicle. For example, the UE device 3250 may be integrated into the vehicle, may be located in the vehicle, or may be located on the vehicle. Also, the UE device 3250 according to the present invention may be the vehicle itself. Also, the UE device 3250 according to the present invention may be at least one of a wearable terminal, AV/VR, an IoT terminal, a robot terminal, and a public safety terminal. The UE device 3250 to which the present invention may apply may include various types of any communication devices that support interactive services using sidelink for services, such as Internet access, service performance, navigation, real-time information, autonomous driving, and safety and risk diagnosis. Also, an AR/VR device capable of performing a sidelink operation or any type of communication device capable of performing a relay operation as a sensor may be included.

Here, the vehicle/terminal to which the present invention may apply include an autonomous vehicle/driving terminal, a semi-autonomous vehicle/driving terminal, non-autonomous vehicle/terminal, and the like. Meanwhile, although it is described that the UE device 3250 according to an example of the present invention is associated with the vehicle, at least one of the UEs may not be associated with the vehicle. This is only an example and should not be interpreted to limit application of the present invention to the described example. Also, the UE device 3250 according to an example of the present invention may include various types of communication devices that may perform cooperation to support interactive services using sidelink. That is, in addition to a case in which the UE device 3250 directly supports interactive services using the side link, it may be used as a cooperative device to support interactive services using the sidelink.

For example, the UE device 3250 may acquire condition information on cell reselection through an RRC message. Here, the condition information on cell reselection may be configured based on at least one of a TAC list, a RAC list, and a cell list. The UE device 3250 may receive the RRC message and may shift to an idle state. Then, the UE device 3250 may move from a camping first cell to a second cell based on mobility. Here, the UE device 3250 may receive the RRC message including measurement related information for cell reselection from the second cell. For example, the measurement related information for cell reselection may include at least one of a TAC list, a RAC list, and a cell ID. Then, the UE device 3250 may verify whether a specific condition is satisfied based on measurement related information for cell reselection received from the second cell. Here, as described above, the specific condition may be a condition for determining whether NTN cell measurement and search is required based on at least one of the aforementioned TAC list, RAC list, and cell ID list. For example, when the specific condition is satisfied based on information acquired from the first cell, and when camping on the second cell, the UE device 3250 may perform an NTN cell search.

Also, for example, the UE device 3250 may acquire reference location information and distance threshold information on each of at least one cell through an RRC message. Here, in the case of a TN cell, the reference location information may be a specific point at which the TN cell is present. As another example, the reference location information may be a location determined based on the TN cell, and is not limited to a specific embodiment. In the case of an NTN cell, the reference location information may be information derived based on the NTN cell. Then, the UE device 3250 may derive distance condition information based on the reference location information and the distance threshold information on each of the at least one cell. Then, as described above, the UE device 3250 may perform a TN cell search based on its current location and the distance condition information.

Also, various embodiments of the present disclosure may be implemented by hardware, firmware, software, or combination thereof. In the case of implementation by hardware, the embodiments may be implemented by one or more application-specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present disclosure includes software or machine-executable instructions (e.g., OS, application, firmware, program, etc.) such that the operations according to the method of various embodiments may be executed on an apparatus or a computer, and a non-transitory computer-readable medium storing such software or instructions to be executable on the apparatus or the computer.

Various embodiments of the present disclosure are to explain the representative aspects of the present disclosure rather than listing all the possible combinations, and matters described in the various embodiments may be applied alone or in combination of two or more embodiments.

INDUSTRIAL APPLICABILITY

The above may also be applied to other systems.


**Claims**

1.  A method of performing, by a user equipment (UE), cell reselection based on non-terrestrial networks (NTN) in a wireless communication system, the method comprising:

    acquiring cell reselection condition information from a base station;
    moving from a first cell to a second cell based on mobility of the UE and acquiring measurement related information for cell reselection from the second cell; and
    performing an NTN cell search when a specific condition for cell reselection is satisfied based on the cell reselection condition information.

2.  The method of claim 1, wherein the cell reselection condition information is configured based on at least one of a tracking area code (TAC) list, a RAN-area code (RAC) list, and a cell ID.

3.  The method of claim 1, wherein the cell reselection condition information is transmitted to the UE through a radio resource control (RRC) message.

4.  A method of performing, by a user equipment (UE), cell reselection based on non-terrestrial networks (NTN) in a wireless communication system, the method comprising:

    acquiring reference location information and distance threshold information on each of at least one cell from a base station;
    deriving distance condition information based on the reference location information and the distance threshold information on each of the at least one cell; and
    performing a terrestrial networks (TN) cell search based on a current location of the UE and the distance condition information.

5.  The method of claim 1, wherein the reference location information and the distance threshold information on each of the at least one cell is included in frequency information configured for each of the at least one cell.

6.  The method of claim 1, wherein the at least one cell includes a TN cell or an NTN cell.

# FIG. 1

| Downlink frame $i$ |
| :-: |

| Uplink frame $i$ |
| :-: |

$$N_{TA}\ T_s$$

# FIG. 2

One sub frame

$N_{\text{sub frame}}^{\text{symbols},\mu}$ OFDM symbols

$k = N_{RB}^{\mu}\, N_{sc}^{RB} - 1$

Resource block

Resource element
$-(k,\bar{l})$ in resource grid
$-(k,l)$ in resource block

$N_{RB}^{\mu}\, N_{sc}^{RB}$ subcarriers

$N_{sc}^{RB}$ subcarriers

$k = 0$

$l = 0$

$\bar{l} = 14 \cdot 2^{\mu} - 1$

**FIG. 3**

**FIG. 4**

EP 4 564 920 A1

UE — NR Uu — gNB

NG-RAN

NG over SRI — NTN Gateway

NG — 5G CN — NG — Data Network

# FIG. 5

EP 4 564 920 A1

NG-RAN

UE — NR Uu — gNB

NG over SRI — NTN Gateway — NG — 5G CN — NG — Data Network

Xn (over ISL)

UE — NR Uu — gNB

NG over SRI — NTN Gateway — NG — 5G CN — NG — Data Network

**FIG. 6**

**FIG. 7**

UE     Satellite     NTN Gateway     5GC:AMF

gNB

NAS — NAS

RRC — NGAP — NGAP
PDCP — SCTP — SCTP
RLC — IP — IP
MAC — L2 — L2
PHY — L1 — L1

NR-Uu     NR-Uu     NG-U

EP 4 564 920 A1

# FIG. 8

- Common TA $(Tcom)=2*D_0/c$
- UE specific differential TA for xth UE $(T_{UEx})=2*(D_{1x}-D_0)/c$
- Full TA $(Tfull)=Tcom+T_{UEx}$

(a) Regenerative payload

- Common TA $(Tcom)=2*(D_{01}+D_{02})/c$
- UE specific differential TA for xth UE $(T_{UEx})=2*(D_{1x}-D_{01})/c$
- Full TA $(Tfull)=Tcom+T_{UEx}$

(b) Transparent payload

# FIG. 9

Satellite moving direction

920
T4
Satellite#2

910
T1
Satellite#1

T2
Satellite#1

T3
Satellite#1

PCI#1 or
another PCI

PCI#1

PCI#1

PCI#1

fixed cell

# FIG. 10

Satellite moving direction

1010 T1 Satellite#1    1020 T Satellite#2    1030 T1 Satellite#3

PCI#1     PCI#2     PCI#3

# FIG. 11

(a)

(b)

**FIG. 12**

**FIG. 13**

# FIG. 14

EP 4 564 920 A1

# FIG. 15

# FIG. 16

# FIG. 17

**FIG. 18**

1810

Satellite

TN Cell 1    TN Cell 5

TN Cell 2    TN Cell 6

TN Cell 3    TN Cell 7

TN Cell 4    TN Cell 8

1822

TAC 6
TAC 5
TAC 13
TAC 10
TAC 17
TAC 7
TAC 14
NTN Cell A
TAC 4
TAC 11
TAC 18
TAC 8
TAC 15
TAC 3
TAC 12
TAC 9

1821

Registration area(RA)

EP 4 564 920 A1

# FIG. 19

EP 4 564 920 A1

**FIG. 20**

EP 4 564 920 A1

# FIG. 21

2110

Satellite

TN Cell 1    TN Cell 4

TN Cell 2    TN Cell 5

TN Cell 3    TN Cell 6

NTN Cell A

TAC#G

TAC#D

TAC#F

TAC#E

TAC#A

TAC#B

TAC#C

RAN Area

EP 4 564 920 A1

**FIG. 22**

EP 4 564 920 A1

**FIG. 23**

Satellite 2310

TN Cell 1   TN Cell 5   TN Cell 9
TN Cell 2   TN Cell 6   TN Cell 10
TN Cell 3   TN Cell 7
TN Cell 4   TN Cell 8

NTN Cell A

TAC 3, TAC 4, TAC 5, TAC 6, TAC 7, TAC 8, TAC 9, TAC 10, TAC 11, TAC 12, TAC 13, TAC 14, TAC 15, TAC 17, TAC 18

EP 4 564 920 A1

# FIG. 24

EP 4 564 920 A1

# FIG. 25

SSB

PSS | PBCH | SSS | PBCH

127 subcarriers

240 subcarriers

4 OFDM Symbols

SSB Burst set

2510  2520  2530  2540  2550  2560  2570

SSB#0 | SSB#1 | SSB#2 | SSB#3 | SSB#4 | SSB#5 | SSB#7

0 2    8    16    22    30    36    50

| Slot 1 | Slot 2 | Slot 3 | Slot 4 | Slot 5 | Slot 6 | Slot 7 | Slot 8 | Slot 9 | Slot 10 |

Radio frame 10 ms

SCS: 15 KHz
3 GHz < f_c < 6 GHz
inOneGroup = [1 1 1 1 1 1 0 1]
SSB starting symbol indexes = [2, 8, 16, 22, 30, 36, 44, 50]

EP 4 564 920 A1

**FIG. 26**

EP 4 564 920 A1

**FIG. 27**

2710
Sat 1, Earth fixed beam

2740
Sat 2, Earth fixed beam

T1    T2    T3        T1    T2    T3

2720

2750

Reference location 1
2730

Reference location 1
2761

Reference location 2
2762

EP 4 564 920 A1

# FIG. 28

2810
Sat 1, Earth fixed beam

T1    T2    T3

TN Cell 2

TN Cell 1    Distance
             threshold
                      Reference
                      location 2

Reference location 1                 2832

2831

**Neighbour cell information for TN Cell 1**
- Reference location 1
- Distance threshold
- NR-ARFCN = 'A'
- TN index = '1'

**Neighbour cell information for TN Cell 2**
- Reference location 2
- Distance threshold
- NR-ARFCN = 'B'
- TN index = '2'

**InterFreqCarrierFreqinfo or MeasIdleCarrierNR 1**
- NR-ARFCN = 'A'
- TN index = '1'
- SMTC

**InterFreqCarrierFreqinfo or MeasIdleCarrierNR 2**
- NR-ARFCN = 'A'
- TN index = '2'
- SMTC

**InterFreqCarrierFreqinfo or MeasIdleCarrierNR 3**
- NR-ARFCN = 'B'
- TN index = '2'
- SMTC

# FIG. 29

2910

Sat 1, Earth fixed beam

- ● Reference location of NTN Cell B
- ◎ Reference location of NTN Cell C
- ○ Reference location of NTN Cell D

# FIG. 30

Start

Acquire condition information on cell reselection through RRC message ─── S3010

Move from first cell to second cell ─── S3020

Receive RRC message including measurement related information for cell reselection from second cell ─── S3030

Is specific condition satisfied? ─── S3040

No

Yes

Perform NTN cell search ─── S3050

End

# FIG. 31

```
                      ┌─────────────┐
                      │    Start    │
                      └──────┬──────┘
                             │
                             ▼
      ┌───────────────────────────────────────┐
      │         Acquire reference location      │
      │   information and distance threshold    │────S3110
      │          through RRC message            │
      └───────────────────┬───────────────────┘
                          │
                          ▼
      ┌───────────────────────────────────────┐
      │   Derive distance condition information │
      │ based on distance threshold information │────S3120
      │    and distance threshold information   │
      └───────────────────┬───────────────────┘
                          │
                          ▼
      ┌───────────────────────────────────────┐
      │    Perform TN cell search by performing │
      │ measurement based on current location of│────S3130
      │    UE and distance condition information │
      └───────────────────┬───────────────────┘
                          │
                          ▼
                   ┌─────────────┐
                   │     End     │
                   └─────────────┘
```

# FIG. 32

## INTERNATIONAL SEARCH REPORT

| International application No. |
| --- |
| **PCT/KR2023/008930** |

**A. CLASSIFICATION OF SUBJECT MATTER**

**H04W 36/08**(2009.01)i; **H04W 36/00**(2009.01)i; **H04W 36/32**(2009.01)i; **H04W 84/06**(2009.01)i; **H04W 48/16**(2009.01)i

According to International Patent Classification (IPC) or to both national classification and IPC

**B. FIELDS SEARCHED**

Minimum documentation searched (classification system followed by classification symbols)

H04W 36/08(2009.01); H04B 7/185(2006.01); H04W 36/00(2009.01); H04W 48/08(2009.01); H04W 84/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NTN(non-terrestrial network), TN(terrestrial network), cell, reselect, neighbor, measurement, condition, threshold, position, distance

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2022-0100010 A (ZTE CORPORATION) 14 July 2022 (2022-07-14)<br>See paragraphs [0017] and [0124]-[0130]; and figure 4. | 1-3 |
| X | KR 10-2021-0025502 A (ACER INCORPORATED) 09 March 2021 (2021-03-09)<br>See paragraphs [0064]-[0090]; claim 3; and figure 6. | 4-6 |
| A | KR 10-2021-0045164 A (SAMSUNG ELECTRONICS CO., LTD.) 26 April 2021 (2021-04-26)<br>See paragraphs [0189]-[0236]; and figures 9-12. | 1-3 |
| A | KR 10-2022-0094162 A (ELECTRONICS AND TELECOMMUNICATIONS RESEARCH INSTITUTE) 05 July 2022 (2022-07-05)<br>See paragraphs [0076]-[0098]; and figures 5-6. | 1-3 |
| A | US 2021-0083760 A1 (IPCOM GMBH & CO. KG) 18 March 2021 (2021-03-18)<br>See paragraphs [0126]-[0132]; and figure 9. | 4-6 |

☑ Further documents are listed in the continuation of Box C.    ☑ See patent family annex.

| | |
| --- | --- |
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **21 September 2023** | **21 September 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/008930** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2021-237735 A1 (BEIJING XIAOMI MOBILE SOFTWARE CO., LTD.) 02 December 2021 (2021-12-02)<br>See page 8, line 25 - page 12, line 12; and figures 3-5. | 4-6 |

Form PCT/ISA/210 (second sheet) (July 2022)

**INTERNATIONAL SEARCH REPORT**

International application No.

**PCT/KR2023/008930**

| Box No. III | Observations where unity of invention is lacking (Continuation of item 3 of first sheet) |
|---|---|

This International Searching Authority found multiple inventions in this international application, as follows:

The invention of group 1: claims 1-3 pertain to a method for performing cell reselection, characterized in that NTN cell search is performed using cell reselection condition information,
The invention of group 2: claims 4-6 pertain to a method for performing cell reselection, characterized in that TN cell search is performed on the basis of the current position of a terminal, and reference position information and distance threshold information about each cell.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet) (July 2022)

**INTERNATIONAL SEARCH REPORT**
Information on patent family members

International application No.

**PCT/KR2023/008930**

| Patent document cited in search report | | | Publication date (day/month/year) | Patent family member(s) | | | Publication date (day/month/year) |
|---|---|---|---|---|---|---|---|
| KR | 10-2022-0100010 | A | 14 July 2022 | CN | 114731561 | A | 08 July 2022 |
| | | | | EP | 4059263 | A1 | 21 September 2022 |
| | | | | EP | 4059263 | A4 | 26 April 2023 |
| | | | | US | 2022-0279394 | A1 | 01 September 2022 |
| | | | | WO | 2021-092810 | A1 | 20 May 2021 |
| KR | 10-2021-0025502 | A | 09 March 2021 | AU | 2021-223645 | A1 | 18 March 2021 |
| | | | | AU | 2021-223645 | B2 | 02 December 2021 |
| | | | | CN | 112437471 | A | 02 March 2021 |
| | | | | EP | 3787348 | A1 | 03 March 2021 |
| | | | | JP | 2021-035060 | A | 01 March 2021 |
| | | | | JP | 7153693 | B2 | 14 October 2022 |
| | | | | KR | 10-2429846 | B1 | 04 August 2022 |
| | | | | TW | 202110219 | A | 01 March 2021 |
| | | | | TW | I746122 | B | 11 November 2021 |
| | | | | US | 11528644 | B2 | 13 December 2022 |
| | | | | US | 2021-0068013 | A1 | 04 March 2021 |
| KR | 10-2021-0045164 | A | 26 April 2021 | EP | 4024959 | A1 | 06 July 2022 |
| | | | | EP | 4024959 | A4 | 19 October 2022 |
| | | | | US | 2022-0225195 | A1 | 14 July 2022 |
| | | | | WO | 2021-075761 | A1 | 22 April 2021 |
| KR | 10-2022-0094162 | A | 05 July 2022 | | None | | |
| US | 2021-0083760 | A1 | 18 March 2021 | BR | 112020016607 | A2 | 15 December 2020 |
| | | | | CN | 111819803 | A | 23 October 2020 |
| | | | | CN | 111819803 | B | 10 June 2022 |
| | | | | CN | 114867074 | A | 05 August 2022 |
| | | | | EP | 3763056 | A1 | 13 January 2021 |
| | | | | JP | 2021-516486 | A | 01 July 2021 |
| | | | | JP | 2022-105002 | A | 12 July 2022 |
| | | | | JP | 7055886 | B2 | 18 April 2022 |
| | | | | JP | 7286835 | B2 | 05 June 2023 |
| | | | | KR | 10-2020-0130255 | A | 18 November 2020 |
| | | | | KR | 10-2022-0115811 | A | 18 August 2022 |
| | | | | KR | 10-2023-0098352 | A | 03 July 2023 |
| | | | | KR | 10-2428609 | B1 | 04 August 2022 |
| | | | | KR | 10-2545973 | B1 | 22 June 2023 |
| | | | | RU | 2022107239 | A | 04 April 2022 |
| | | | | US | 11218214 | B2 | 04 January 2022 |
| | | | | WO | 2019-170866 | A1 | 12 September 2019 |
| WO | 2021-237735 | A1 | 02 December 2021 | BR | 112022024220 | A2 | 20 December 2022 |
| | | | | CN | 114073128 | A | 18 February 2022 |
| | | | | EP | 4161145 | A1 | 05 April 2023 |
| | | | | KR | 10-2023-0010726 | A | 19 January 2023 |
| | | | | US | 2023-0089127 | A1 | 23 March 2023 |

Form PCT/ISA/210 (patent family annex) (July 2022)